# EUROPEAN PATENT SPECIFICATION

(11) **EP 2 210 926 B1**
(45) Date of publication and mention of the grant of the patent: **08.01.2014**
(21) Application number: 08848817.6
(22) Date of filing: 11.11.2008
(51) Int. Cl.: C09J 7/00, C09J 183/04, G02F 1/1335

(54) **TRANSPARENT PRESSURE-SENSITIVE ADHESIVE PRODUCT FOR OPTICAL USE, TRANSPARENT PRESSURE-SENSITIVE ADHESIVE LAMINATES FOR OPTICAL USE AND PROCESS FOR PRODUCTION OF THE SAME**
TRANSPARENTES UND DRUCKEMPFINDLICHES HAFTPRODUKT ZUR OPTISCHEN VERWENDUNG, TRANSPARENTE UND DRUCKEMPFINDLICHE HAFTLAMINATE ZUR OPTISCHEN VERWENDUNG UND VERFAHREN ZU IHRER HERSTELLUNG
PRODUIT ADHÉSIF AUTOCOLLANT TRANSPARENT À USAGE OPTIQUE, STRATIFIÉS ADHÉSIFS AUTOCOLLANTS TRANSPARENTS À USAGE OPTIQUE ET LEUR PROCÉDÉ DE PRODUCTION

(30) Priority: 16.11.2007 JP 2007297782
(43) Date of publication of application: 28.07.2010
(73) Proprietor: Taica Corporation, Tokyo 108-0074 (JP)
(72) Inventor: MASUDA, Masahiko, Shizuoka-shi Shizuoka 424-0911 (JP); NAKATA, Yoriko, Shizuoka-shi Shizuoka 424-0911 (JP); KAWAI, Hidetomo, Shizuoka-shi Shizuoka 424-0911 (JP)
(74) Representative: Müller-Boré & Partner Patentanwälte
(86) International application number: PCT/JP2008/070462
(87) International publication number: WO 2009/063847

(56) References cited:
- JP-A- 11 021 521
- JP-A- 2003 176 462
- JP-A- 2004 292 493
- JP-A- 2006 290 960
- JP-A- 2007 039 510
- JP-T- 2006 509 093

## Description

### BACKGROUND OF THE INVENTION

### FIELD OF THE INVENTION

The present invention relates to a transparent pressure-sensitive adhesive product for optical use, employed for bonding optical components, to a transparent pressure-sensitive adhesive laminate for optical use, and to a manufacturing method thereof. More particularly, the present invention relates to a transparent pressure-sensitive adhesive product for optical use, a transparent pressure-sensitive adhesive laminate for optical use and a manufacturing method thereof, which afford stable peeling site selectivity between release sheets and both faces of the transparent pressure-sensitive adhesive product upon affixing to an optical component, and which accomplish, in a stable and easy manner, peeling site selectivity on both faces of a transparent pressure-sensitive adhesive product during rework, i.e. when the transparent pressure-sensitive adhesive product sheet is removed from the optical component and re-affixed, and/or during reuse (recycling) of the optical component.

### DESCRIPTION OF THE PRIOR ART

During assembly of optical components through bonding using transparent pressure-sensitive adhesive sheets, it is important to achieve stable peeling site selectivity between a transparent pressure-sensitive adhesive sheet and a release sheet, in order to improve handleability and productivity (automation) . At the same time, growing importance is being placed on product design that takes into account factors such as the environment, resource protection and production cost reductions through increased yields. In this context, stably realizing peeling site selectivity when removing a transparent pressure-sensitive adhesive sheet from an optical component has become a significant issue in production systems that are designed taking into account, among others, rework and recycling during the assembly of the optical component.

Methods employed conventionally to achieve peeling site selectivity between transparent pressure-sensitive adhesive sheets and release sheets involve modifying the peeling strength of the release sheets affixed to the front and rear faces of the transparent pressure-sensitive adhesive sheet, for instance by modifying the type of release sheet on the front and rear faces, or by treating the surface of one of the faces of the transparent pressure-sensitive adhesive sheet and modify thereby the tackiness of the transparent pressure-sensitive adhesive sheet.

Methods that involve modifying the type of release sheet on the front and rear faces, however, require extensive experimental verification, which constitutes a significant practical problem, in order tomatch the tackiness of the transparent pressure-sensitive adhesive sheet towards the release sheet in such a manner that, once release-side selectivity is achieved in the pressure-sensitive adhesive sheet, the whole is optimized so that, after affixing to the optical component, another release film can also be peeled stably. Moreover, re-appraisal became often necessary every time that design was modified as regards, for instance, specifications of the transparent pressure-sensitive adhesive sheet or the adherends. Matching in this case could only be made based on experience.

In methods that involve modifying the tackiness of the transparent pressure-sensitive adhesive sheet by way of a surface treatment, productivity dropped in proportion to the supplementary surface treatment process. Moreover, fine control of tackiness was difficult, and often relied on special equipment and solvents harmful to the environment.

Such methods do not contemplate optical component recycling and recovery, and/or rework during assembly.

Various pressure-sensitive adhesive sheets and adhesive sheets for optical components have been proposed in the art. For instance, Patent document 1 proposes a light-transmitting pressure-sensitive adhesive sheet that can be disposed between a liquid crystal display panel and a transparent protective plate that protects the liquid crystal display panel. The sheet, which affords high visibility, shock absorption and productivity, is installed without air becoming trapped in the process. In order to enable adhesion of the light transmitting pressure-sensitive adhesive sheet, the latter comprises a transparent gel having a ball number of 5 to 30 (inclination angle: 30 degrees) as measured by the inclined ball tack test according to JIS Z0237, preferably a silicone gel having a needle penetration depth of 20 to 160 (JIS K 2207-1980, load: 50 g). Patent document 2 aims at providing a crosslinked silicone-base adhesive sheet having stable release surfaces during peeling of protecting films that are adhered to both sides of the sheet, and to provide a method for efficiently producing such a sheet. To this end, Patent document 2 proposes a crosslinked silicone-based adhesive sheet, and a manufacturing method thereof, wherein the crosslinked silicone-based adhesive sheet has a film thickness no greater than 100 µm and has protecting films adhered to both sides; the peel strength of the protective films relative to the sheet is no greater than 5.0 N/m; and the difference in the peel strength of the protecting films is not smaller than 0.2 N/m. The method for producing the crosslinked silicone-based adhesive sheet comprises a step of forming a crosslinkable silicone composition between two protective films comprising dissimilar materials, in such a manner that the composition becomes a sandwiched film having a thickness no greater than 100 µm; and a step of cross-linking the composition.

In these pressure-sensitive adhesive sheets, the pressure-sensitive adhesive sheet, having laminated thereon a release film for adhesive face protection, is supplied to an actual production line in which the image display device is assembled, and where the pressure-sensitive adhesive sheet is affixed to an adherend (for instance, a liquid crystal device) after peeling of the release film off the pressure-sensitive adhesive sheet. In the pressure-sensitive adhesive sheet disclosed in Patent document 1, however, there is no release face selectivity between the front and rear faces of the pressure-sensitive adhesive sheet. In mass production of the image display device, the optimal release sheet must be found on a case-by-case basis in accordance with the assembly specifications. The pressure-sensitive adhesive sheet of Patent document 1 was therefore inappropriate for speedy and stable mass production.

The crosslinked silicone-based adhesive sheet disclosed in Patent document 2 solves the problem of Patent document 1 in that herein the adhesive sheet has good peeling site selectivity with release sheets and has good adhesive strength towards adherends. However, the features of Patent document 2 assumed a so-called pressure-sensitive adhesive tape having a sheet thickness no greater than 100 µm, and hence Patent document 2 failed to realize stable peeling site selectivity in sheets thicker than 100 µm, particularly in viscoelastic sheets. Patent document 2, moreover, shows no awareness of the need for securing good re-peelability and peeling site selectivity also during re-affixing in the rework of defective parts, which are inevitable in mass production.

Examples of necessary rework include, for instance, re-affixing work when air bubbles become trapped upon affixing of the adhesive sheet to a display, since such air bubbles give rise to uneven display in terms of luminance, brightness and color. Other examples include, for instance, component replacement on account of affixing position offset, external appearance flaws.

To address the above problems and shortcomings, a need has therefore arisen for stable peeling site selectivity between a release sheet and a transparent pressure-sensitive adhesive product sheet during affixing. Likewise, a need has arisen for realizing, in a stable and easy manner, peeling site selectivity on both faces of a transparent pressure-sensitive adhesive product sheet during rework, when the transparent pressure-sensitive adhesive product sheet is removed from an optical component and re-affixed. JP A 2004 292493, JP A 2006 509093, JP A 2007 039510, JP A11 02 1521 also relate to further adhesive layers.
Patent document 1: Japanese Patent Publication Application 2006-290960
Patent document 2: Japanese Patent Publication Application 2003-176462

### SUMMARY OF THE INVENTION

In the light of the above problems, it is an object of the present invention to provide a transparent pressure-sensitive adhesive product, a transparent pressure-sensitive adhesive laminate for optical use and a manufacturing method thereof, which afford stable peeling site selectivity between release sheets and both faces of a transparent pressure-sensitive adhesive product upon affixing, and which realize, in a stable and easy manner, peeling site selectivity on both faces of the transparent pressure-sensitive adhesive product during rework, when the transparent pressure-sensitive adhesive product is removed from an optical component and is re-affixed.

As a result of diligent research directed at solving the above problems, the inventors found that the above problem is solved, and rework stability can be realized by imparting a specific difference between peel strength towards release sheets on both faces of a transparent pressure-sensitive adhesive product sheet that is cured together with the release sheets, and by imparting a specific difference in tackiness between the two faces of the transparentpressure-sensitive adhesive product sheet after peeling of the release sheets. The inventors further found a transparent pressure-sensitive adhesive product sheet having different tackiness on the front and rear faces, and a manufacturing method thereof, in which peel strength and tackiness can be controlled without re-selecting the release sheets and without applying a surface treatment agent, based on the release sheets and the starting material of the uncured transparent pressure-sensitive adhesive product. The present invention was perfected on the basis of the above findings.

That is, according to a first aspect of the present invention, there is provided a transparent pressure-sensitive adhesive product for optical use, having an adhesive face (a) and an adhesive face (b) of dissimilar tackiness, and formed of an addition reaction-type silicone gel, wherein a relationship between an adhesive power (Ga) of the adhesive face (a) and an adhesive power (Gb) of the adhesive face (b) is Ga<Gb, and the adhesive power (Ga) and the adhesive power (Gb) yield a ball number from 3 to 15 and a ball number difference from 2 to 12, in an inclined ball tack test (inclination angle 30 degrees) according to JIS Z0237.

In addition, the adhesive face (a) and the adhesive face (b) above are formed by heating and curing an uncured startingmaterial of the addition reaction-type silicone gel brought into close contact with a release film (A) and a release film (B) of dissimilar types.

In addition, according to a second aspect of the present invention, there is provided the transparent pressure-sensitive adhesive product for optical use in the first aspect, wherein the adhesive face (a) is formed by heating and curing an uncured starting material of the addition reaction-type silicone gel that is brought into contact with air, and the adhesive face (b) is formed by heating and curing an uncured startingmaterial of the addition reaction-type silicone gel that is brought into close contact with a release film (B).

In addition, according to a third aspect of the present invention, there is provided the transparent pressure-sensitive adhesive product for optical use in the first or second aspect, wherein a relationship between a peel strength (F1) between the release film (A) and the adhesive face (a), a peel strength (F2) between the release film (B) and the adhesive face (b), and a peel strength (F3) between the adhesive face (a) and an adherend (C) is such that a 180-degree peel adhesion difference between the peel strength (F1) and the peel strength (F2) ranges from 0.2 to 1.0 N/25 mm, and the 180-degree peel adhesion difference between the peel strength (F2) and the peel strength (F3) is not smaller than 0.2 N/25 mm, in an adhesive strength test in accordance with JIS Z0237.

In addition, according to a fourth aspect of the present invention, there is provided the transparent pressure-sensitive adhesive product for optical use in the fourth aspect, wherein a relationship between the peel strength (F3) and a peel strength (F4) between the adhesive face (b) and an adherend (D) is such that the 180-degree peel adhesion difference between the peel strength (F3) and the peel strength (F4) is not smaller than 0.2 N/25 mm, in an adhesive strength test in accordance with JIS Z0237.

In addition, according to a fifth aspect of the present invention, there is provided the transparent pressure-sensitive adhesive product for optical use in the first aspect, wherein the hardness of the silicone gel is an Asker C hardness of 0 to 30, according to the SRIS 0101 standard, or a needle penetration depth (25°C) of 20 to 200 according to JIS K2207.

In addition, according to a sixth aspect of the present invention, there is provided the transparent pressure-sensitive adhesive product for optical use in the sixth aspect, wherein the transmittance of the silicone gel at a wavelength of 380 to 780 nm is not lower than 80%.

In addition, according to a seventh aspect of the present invention, there is provided the transparent pressure-sensitive adhesive product for optical use in the second or third aspect, wherein the release film (A) is an alkyd resin-based release film, and the release film (B) is a fluorosilicone-based release film.

According to a eighth aspect of the present invention, there is provided a transparent pressure-sensitive adhesive laminate for optical use, characterized by being obtained by laminating a release film (A) on the adhesive face (a), and a release film (B) on the adhesive face (b), of the transparent pressure-sensitive adhesive product for optical use according to the first aspect.

In addition, according to a ninth aspect of the present invention, there is provided a transparent pressure-sensitive adhesive laminate for optical use, characterized by being obtained by laminating a release film (B) on the adhesive face (b) of the transparent pressure-sensitive adhesive product for optical use according to the first aspect to yield a roll-shape laminate in which the rear face of the release film (B) is in contact with the adhesive face (a).

In addition, according to a tenth aspect of the present invention, there is provided a method for manufacturing the transparent pressure-sensitive adhesive laminate for optical use according to the ninth aspect, the method comprising a molding step of sandwiching an uncured liquid addition reaction-type silicone gel starting material between a release film (A) and a release film (B), and setting the thickness of the material; a heating step of heating and curing, after molding or simultaneously with molding; and a cooling step of cooling the cured silicone gel obtained in the heating and curing step, together with the release film (A) and the release film (B).

In addition, according to a eleventh aspect of the present invention, there is provided a method for manufacturing the transparent pressure-sensitive adhesive laminate for optical use according to the ninth aspect, the method comprising a molding step of supplying an uncured liquid addition reaction-type silicone gel starting material onto a release film (B), and setting the thickness of the material; a heating step of heating and curing, while in contact with air, at least part of the surface of the uncured silicone gel starting material that is not in contact with the release film (B), after molding or simultaneously with molding; a cooling step of cooling the cured silicone gel obtained in the heating and curing step, together with the release film (B) ; and a release film affixing step of affixing a release film (A) to the face heated and cured in contact with air in the heating step.

In addition, according to a twelfth aspect of the present invention, there is provided a method for manufacturing the transparent pressure-sensitive adhesive laminate for optical use according to the tenth aspect, the method comprising a molding step of supplying an uncured liquid addition reaction-type silicone gel starting material onto a release film (B), and setting the thickness of the material; a heating step of heating and curing, while in contact with air, at least part of the surface of the uncured silicone gel starting material that is not in contact with the release film (B), after molding or simultaneously with molding; a cooling step of cooling the cured silicone gel obtained in the heating and curing step, together with the release film (B); and a winding step of winding the release film (B), with the adhesive face (a) formed by curing in contact with air in the heating step being in contact with the rear face of the release film (B).

According to a thirteenth aspect of the present invention, there is provided a method for manufacturing the transparent pressure-sensitive adhesive laminate for optical use according to the tenth aspect, the method comprising a molding step of sandwiching an uncured liquid addition reaction-type silicone gel starting material between a release film (A) and a release film (B), and setting the thickness of the material; a heating step of heating and curing, after molding or simultaneously with molding; a cooling step of cooling the cured silicone gel obtained in the heating and curing step, together with the release film (A) and the release film (B); a peeling step of peeling the release film (A) off the cured silicone gel and exposing the adhesive face (a); and a winding step of winding to a roll shape together with the release film (B), with the adhesive face (a) being in contact with the rear face of the release film (B).

In addition, according to a fourteenth aspect of the present invention, there is provided the method for manufacturing a transparent pressure-sensitive adhesive product for optical use according to the eleventh or twelfth aspect, wherein the face of the release film (A) that comes into contact with the transparent pressure-sensitive adhesive product is subjected to an alkyd resin-based release treatment, and the face of the release film (B) that comes into contact with the transparent pressure-sensitive adhesive product is subjected to a fluorosilicone-based release treatment.

In addition, according to a fifteenth aspect of the present invention, there is provided the method for manufacturing a transparent pressure-sensitive adhesive product for optical use according to the thirteenth or fourteenth aspect, wherein the face of the release film (B) that comes into contact with the transparent pressure-sensitive adhesive product is subjected to a fluorosilicone-based release treatment, and the rear face of the release film (B) is subjected to an alkyd resin-based release treatment.

In addition, according to a sixteenth aspect of the present invention, there is provided the method for manufacturing a transparent pressure-sensitive adhesive product for optical use according to any one of the eleventh to fourteenth aspect, wherein in the heating step, the heating temperature on the side at which the uncured silicone gel starting material is in contact with the release film (A) or air is different from the heating temperature on the side at which the uncured silicone gel starting material is in contact with the release film (B).

In addition, according to a seventeenth aspect of the present invention, there is provided the method for manufacturing a transparent pressure-sensitive adhesive product for optical use according to any one of the eleventh to fourteenth aspect, wherein in the cooling step, the cooling speed gradient on the side at which the cured silicone gel is in contact with the release film (A) or air is different from that on the side at which the cured silicone gel is in contact with the release film (B).

The transparent pressure-sensitive adhesive product for optical use of the present invention allows realizing stably excellent selective releasability when built into image display devices, and is therefore suitable for automation and can contribute to improving productivity and reducing costs. Moreover, hardness and tackiness can be easily controlled, and specification changes can be adopted quickly, while preserving the transparency of the transparent pressure-sensitive adhesive product sheet. The transparent pressure-sensitive adhesive product for optical use has selective releasability during rework and recycling operations, and elicits hence the effects of coping also with automation of rework and recycling operations, while contributing to reducing environmental impact and to cutting costs.

The manufacturing method of the present invention is a straightforward method comprising simple steps, and is thus an effective and high-productivity method.

### BRIEF DESCRIPTION OF THE DRAWINGS

Figure 1 is a set of schematic diagrams for explaining a transparent pressure-sensitive adhesive product for optical use and a transparent pressure-sensitive adhesive laminate for optical use of the present invention, in which (a) is a schematic diagram (cross-sectional diagram) of a transparent pressure-sensitive adhesive laminate for optical use, and (b) is a schematic diagram (cross-sectional diagram) of the transparent pressure-sensitive adhesive laminate for optical use with part thereof peeled away;
Figure 2 is a schematic diagram for explaining a transparent pressure-sensitive adhesive product for optical use and a transparent pressure-sensitive adhesive laminate for optical use in another embodiment of the present invention;

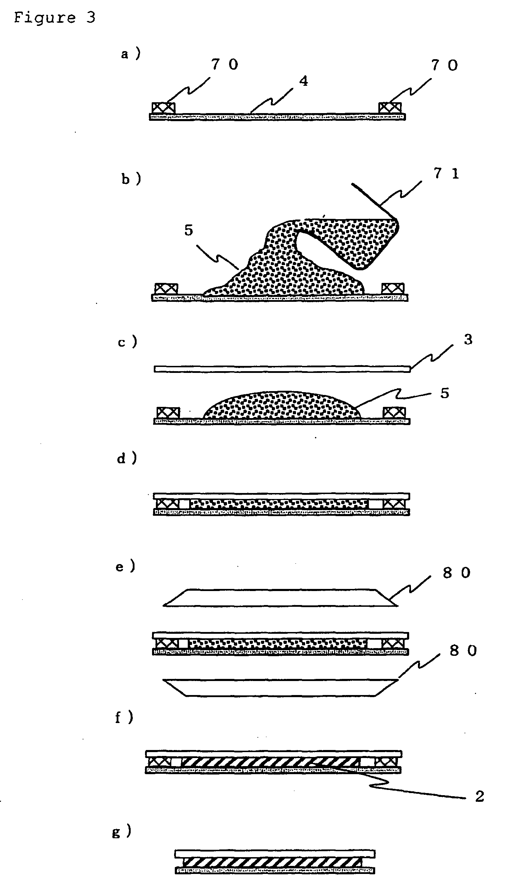

Figure 3 is a set of schematic diagrams for explaining a production process of the transparent pressure-sensitive adhesive product for optical use and the transparent pressure-sensitive adhesive laminate for optical use of the present invention, in which (a) illustrates a step of setting a release film (B) in a mold; (b) illustrates a step of filling an uncured starting material; (c) to (d) illustrate a molding step with and overlaid release film (A); (e) illustrates a heating and curing step; (f) illustrates a cooling step; and (g) illustrates the completed transparent pressure-sensitive adhesive laminate for optical use;

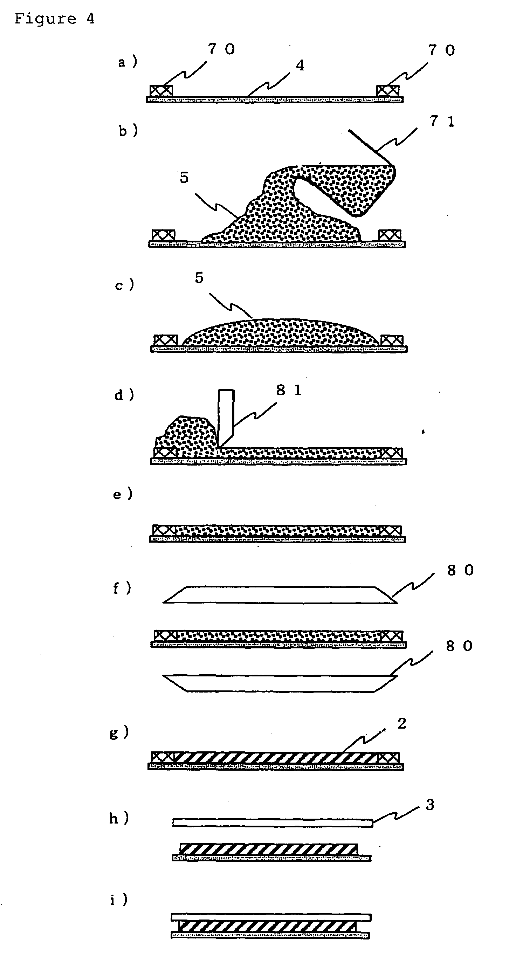

Figure 4 a set of schematic diagrams for explaining a production process of the transparent pressure-sensitive adhesive product for optical use and the transparent pressure-sensitive adhesive laminate for optical use in another embodiment of the present invention, in which (a) illustrates a step of setting a release film (B) in a mold; (b) illustrates a step of filling an uncured starting material; (c) to (e) illustrate a molding step using a squeegee; (f) illustrates a heating and curing step; (g) illustrates a cooling step; (h) illustrates a step of affixing a release film (A); and (i) is a diagram of the completed transparent pressure-sensitive adhesive laminate for optical use;
Figure 5 is a schematic diagram for explaining a continuous production process of the transparent pressure-sensitive adhesive product for optical use and transparent pressure-sensitive adhesive laminate for optical use of the present invention;
Figure 6 is a schematic diagram for explaining a continuous production process of the transparent pressure-sensitive adhesive product for optical use and transparent pressure-sensitive adhesive laminate for optical use in another embodiment of the present invention;
Figure 7 is a schematic diagram for explaining a continuous production process of the transparent pressure-sensitive adhesive product for optical use and transparent pressure-sensitive adhesive laminate for optical use in another embodiment of the present invention;
Figure 8 is a schematic diagram for explaining a continuous production process of the transparent pressure-sensitive adhesive product for optical use and transparent pressure-sensitive adhesive laminate for optical use in another embodiment of the present invention;

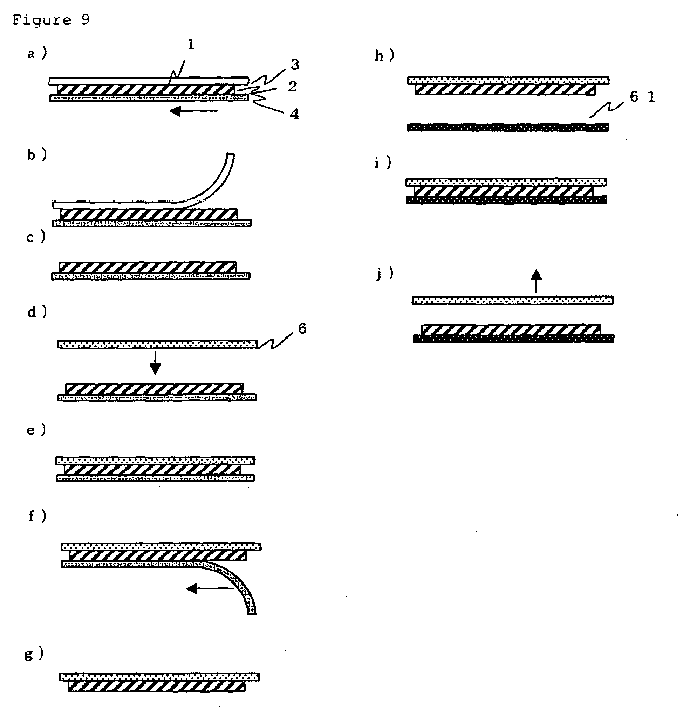

Figure 9 is a schematic diagram for explaining the procedure of a release stability test in a working example of the present invention, in which (a) to (c) illustrate an evaluation step (I), (d) to (g) illustrate an evaluation step (II), and (h) to (j) illustrate an evaluation step (III);
Figure 10 is a set of schematic side-view diagrams for explaining the configuration of specimens in a peel strength test for evaluating peel strengths F1 and F2 in a working example of the present invention, in which (a) illustrates a specimen for measuring F1, and (b) illustrates a specimen for measuring F2;
Figure 11 is a set of schematic side-view diagrams for explaining the configuration of specimens in a peel strength test for evaluating peel strengths F3 and F4 in a working example of the present invention, in which (a) illustrates a specimen for measuring F3, and (b) illustrates a specimen for measuring F4;
Figure 12 is a schematic diagram (cross-sectional diagram) for explaining the configuration of an image display device having built thereinto the transparent pressure-sensitive adhesive product for optical use of the present invention;
Figure 13 is a schematic diagram (cross-sectional diagram) for explaining the configuration of another embodiment of an image display device having built thereinto the transparent pressure-sensitive adhesive product for optical use of the present invention; and
Figure 14 is a schematic diagram (cross-sectional diagram) for explaining the configuration of another embodiment of an image display device having built thereinto the transparent pressure-sensitive adhesive product for optical use of the present invention.

### NOTATION

1, 100, 101, 102, 103, 104, 105 transparent pressure-sensitive adhesive laminate for optical use
2 transparent pressure-sensitive adhesive product for optical use
21 adhesive face (a)
22 adhesive face (b)
3 release film (A)
4 release film (B)
5 uncured starting material of a transparent pressure-sensitive adhesive product for optical use
6 adherend (C)
61 adherend (D)
62 front plate
63, 631, 632 polarizing plate
65 electric display element (liquid crystal element, organic EL element, plasma light-emitting element or the like)
70 spacer (frame)
71 starting material container
73 primer
75 winding core
80 heating device (heater)
81 doctoring blade (squeegee)
82 starting material supply device
83 cooling device
84, 841, 842, 843, 844, 845 transport device (conveyor)
85 calendering roll
86 sheet cutting device
87 release film (A) affixing device
91 release film (B) supply device (roll)
92 release film (A) supply device (roll)
93 release film (A) releasing and recovering device (roll)
94 release film (A) supply-for-affixing device (roll)

### DETAILED DESCRIPTION OF THE INVENTION

The transparent pressure-sensitive adhesive product for optical use of the present invention is used, sandwiched between two optical components, as an interlayer in optical guides of image display devices.

In a process of assembling the image display device or the like, the transparent pressure-sensitive adhesive product for optical use is handled as a transparent pressure-sensitive adhesive laminate for optical use having a release film (A) affixed to an adhesive face (a) and a release film (B) affixed to an adhesive face (b).

In order to bond two optical components (for instance, an adherend (C) and an adherend (D)) to an optical transparent pressure-sensitive adhesive product for optical use, in the above assembly step:
(I) firstly, the release film (A) is peeled off the optical transparent pressure-sensitive adhesive laminate, whereby an adhesive face (a) is exposed;
(II) an adherend (C) is affixed to the adhesive face (a);
(III) next, the release film (B) is peeled off the pressure-sensitive adhesive laminate, without the adherend (C) being peeled off the adhesive face (a), whereby the adhesive face (b) is exposed; and
(IV) an adherend (D) is affixed to the adhesive face (b).
   When affixing defects (such as misalignment, intrusion of foreign matter or the like) occur after bonding of the adherend (C) and the adherend (D) by way of the optical transparent pressure-sensitive adhesive product, the defect is eliminated by peeling the adherends off the optical transparent pressure-sensitive adhesive product.
(V) Herein, rework can be rationalized and rendered amenable to mechanization by selectively peeling, in a stable manner, either the adherend (C) or the adherend (D) off the transparent pressure-sensitive adhesive product for optical use.

In order for the procedure (I) to (V) to be carried out reliably, the peel strength (F1) between the release film (A) and the adhesive face (a), the peel strength (F2) between a release film (B) and the adhesive face (b), the peel strength (F3) between the adhesive face (a) and the adherend (C), and the peel strength (F4) between the adhesive face (b) and the adherend (D) must satisfy the relationship F1<F2<F3<F4.

To stabilize the above peel strength relationship, the transparent pressure-sensitive adhesive product for optical use of the present invention is a transparent pressure-sensitive adhesive product for optical use having an adhesive face (a) and an adhesive face (b) of dissimilar tackiness, and formed of an addition reaction-type silicone gel, wherein a relationship between an adhesive power (Ga) of the adhesive face (a) and an adhesive power (Gb) of the adhesive face (b) is Ga<Gb; and the adhesive power (Ga) and the adhesive power (Gb) yield a ball number from 3 to 15 and a ball number difference from 2 to 12, in an inclined ball tack test (inclination angle 30 degrees) according to JIS Z0237. The transparent pressure-sensitive adhesive product for optical use of the present invention improves selective separation of adherends during rework, which was overlooked in conventional art, and is therefore highly suitable for automation.

A detailed explanation follows next on the transparent pressure-sensitive adhesive product for optical use, the transparent pressure-sensitive adhesive laminate for optical use and manufacturing method thereof of the present invention.

### 1. Transparent pressure-sensitive adhesive product for optical use (i) Addition reaction-type silicone gel

The transparent pressure-sensitive adhesive product for optical use of the present invention is formed by an addition reaction-type silicone gel having tackiness.

Preferably, the silicone gel exhibits an Asker C hardness, according to the SRIS 0101 standard, ranging from 0 to 30, or a needle penetration depth of 20 to 200 (25°C) according to JIS K2207 "Petroleum asphalts".

In the present invention, the term transparent encompasses colorless transparent, colored transparent, and semi-transparent. Preferably, the transparent silicone gel used in the present invention exhibits a total transmittance not lower than 80% to visible light, in a wavelength region of 380 to 780 nm, (according to JIS K7105 "Test Methods for Optical Characteristics of Plastics"), more preferably not lower than 85%, and in particular, not lower than 90%.

Transmittance is an index of the degree of transparency of a transparent member. When transmittance is lower than 80%, the light emitted by a screen has difficulty in traversing the transparent member, and visibility decreases. Also, it is undesirable that the wavelength band within which transmittance is 80% or higher should be narrower than the band from 380 nm to 780 nm, since in that case translucence would decrease on the red side (long wavelengths) or the blue side (short wavelengths). Herein, transmittance denotes a value measured using a spectrophotometer or the like.

As the above-mentioned addition reaction-type silicone gel there can be selected and used any known silicone compound ordinarily employed as a commercially available silicone material. Accordingly, the silicone gel may be, for instance, of thermal curing type, of normal-temperature curing type, or a silicone gel whose curing mechanism is of condensation type or addition type. Preferably, the silicone gel is obtained in particular from an addition-type silicone composition. Groups that bond to silicon atoms are not particularly limited, and may be, for instance, alkyl groups such as methyl, ethyl or propyl; cycloalkyl groups such as cyclopentyl or cyclohexyl; alkenyl groups such as vinyl or allyl; aryl groups such as phenyl or tolyl; as well as groups in which the hydrogen atoms of the foregoing groups are partially substituted with other atoms or bonding groups.

For instance, the product CF-5106 (needle penetration depth 150), by Dow Corning Toray, is a concrete example of a good addition reaction-type silicone gel material. Such silicone gel materials can be obtained by dividing starting-material silicone resins into a solution A and a solution B, and mixing then the solutions to a predetermined ratio, followed by heating to yield a silicone gel material having a desired needle penetration depth.

The method for preparing the addition reaction (or cross-linking) type silicone gel used in the present invention is not particularly limited, but the silicone gel is ordinarily obtained by using, as starting materials, the below-described organohydrogenpolysiloxanes and alkenyl polysiloxanes, and causing these polysiloxanes to take part in a hydrosilylation reaction (addition reaction) in the presence of a catalyst. Specifically, the starting materials of the silicone gel of the present invention often denote an organohydrogenpolysiloxane and an alkenyl polysiloxane. The organohydrogenpolysiloxane used as one of the starting materials is preferably an organohydrogenpolysiloxane represented by formula (1) below.

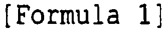

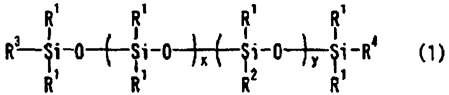

In the formula, R¹ represents an identical or different, substituted or unsubstituted, monovalent hydrocarbon group; R², R³ and R⁴ represent R¹ or -H, such that at least two among R², R³ and R⁴ represent -H; x and y are integers representing the number of respective units; the units are disposed in blocks or randomly, preferably randomly; x is an integer from 0 upwards but ranging preferably from 10 to 30; and y is an integer from 0 upwards but ranging preferably from 1 to 10. Herein, x+y is an integer from 5 to 300, preferably from 30 to 200. Preferably, y/(x+y)≤0.1. Cross-linking points become numerous when this range is exceeded, and the transparent pressure-sensitive adhesive product for of the present invention cannot be obtained.

Examples of R¹ include, for instance, alkyl groups such as methyl, ethyl, propyl or butyl; cycloalkyl groups such as cyclopentyl or cyclohexyl; aryl groups such as phenyl or tolyl; aralkyl groups such as benzyl or phenylethyl; or a halogenated hydrocarbon in which the hydrogen atoms of the foregoing are partially substituted with chlorine atoms, fluorine atoms or the like.

The hydrogen atoms directly bonded to silicon atoms (Si-H) are necessary for an addition reaction (hydrosilylation reaction) with alkenyl groups bonded directly or indirectly to silicon atoms. Each organohydrogenpolysiloxane molecule must comprise at least two such hydrogen atoms. A small number of hydrogen atoms directly bonded to silicon atoms is undesirable, since in this case the number of cross-linking points is excessively small, which disables the silicone gel formation, and resulting characteristics are no different from those of a silicone oil. An excessively large number of hydrogen atoms directly bonded to silicon atoms is likewise undesirable in that cross-linking points become then too numerous, and resulting characteristics are no different from those of a silicone rubber.

The alkenyl polysiloxane used as the other starting material for manufacturing the crosslinked silicone gel according to the present invention is preferably represented by formula (2) below.

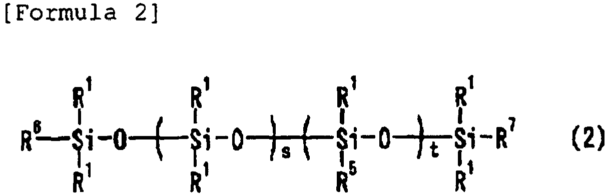

In the formula, R¹ represents an identical or different, substituted or unsubstituted, monovalent hydrocarbon group; R⁵, R⁶ and R⁷ represent R¹ or an alkenyl group, such that at least two among R⁵, R⁶ and R⁷ represent an alkenyl group; s and t are integers representing the number of respective units; the units are disposed in blocks or randomly, preferably randomly; s represents an integer from 0 upwards; t represents an integer from 0 upwards; s+t is an integer from 10 to 600, and t/(s+t)<0.1. Preferably, t/(s+t)≤0.1, since cross-linking points become too numerous when this range is exceeded, which precludes obtaining the transparent pressure-sensitive adhesive product for optical use of the present invention.

Examples of R¹ include, for instance, alkyl groups such as methyl, ethyl, propyl or butyl; cycloalkyl groups such as cyclopentyl or cyclohexyl; aryl groups such as phenyl or tolyl; aralkyl groups such as benzyl or phenylethyl; or a halogenated hydrocarbon in which the hydrogen atoms of the foregoing are partially substituted with chlorine atoms, fluorine atoms or the like.

The alkenyl groups (vinyl, allyl or the like) directly or indirectly bonded to silicon atoms are necessary for carrying out the addition reaction (hydrosilylation reaction) with hydrogen atoms directly bonded to silicon atoms (Si-H). Each alkenyl polysiloxane molecule must comprise at least two such alkenyl groups. A small number of alkenyl groups are undesirable, since in this case the number of cross-linking points is excessively small, which disables silicone gel formation, and resulting characteristics are no different from those of a silicone oil. An excessively large number of alkenyl groups is likewise undesirable in that cross-linking points become then too numerous, and resulting characteristics are no different from those of a silicone rubber.

In the present invention, the hydrogenpolysiloxane represented by formula (1) has -H (hydrogen groups) directly bonded to silicon atoms, while the alkenyl polysiloxane represented by formula (2) has C-C double bonds. The resulting addition reaction between the C-C double bonds and the -H (hydrogen groups) is called a hydrosilylation reaction.

The hydrosilylation reaction can be carried out in accordance with known techniques. For instance, the reaction can be carried out in an inorganic solvent or an organic solvent, for instance an alcohol such as ethanol or isopropyl alcohol; an aromatic hydrocarbon solvent such as toluene or xylene; an ether solvent such as dioxane or THF; an aliphatic hydrocarbon solvent, or a chlorinated hydrocarbon solvent. The reaction temperature ranges ordinarily from 50 to 150°C. The reaction can employ a catalyst, for instance, chloroplatinic acid or a complex of chloroplatinic acid and an alcohol, a platinum-olefin complex, a platinum-vinylsiloxane complex, a platinum-phosphorus complex or the like. The amount of catalyst ranges ordinarily from 1 to 500 ppm, preferably from 3 to 250 ppm in platinum atom terms, relative to the alkenyl polysiloxane, from the viewpoint of curability and the physical properties of the cured article.

The tackiness of the above-described silicone gel derives from the non-cross-linking functional groups on the surface. The silicone gel used can have tackiness suitably imparted thereto in accordance with a known tackiness-imparting method in which tackiness is elicited by, for instance, addition of an MQ resin-type tackiness-imparting component, addition of a non-reactive tacky component, or adjustment of, for instance, the type of non-terminal functional groups and/or the length of the side chains of non-cross-linking functional groups.

The transparent pressure-sensitive adhesive product for optical use of the present invention has an adhesive face (a) and an adhesive face (b) of dissimilar tackiness.

The transparent pressure-sensitive adhesive product for optical use of the present invention satisfies also the following relationship.

Specifically, a peel strength (F1) between a release film (A) and the adhesive face (a), a peel strength (F2) between a release film (B) and the adhesive face (b), a peel strength (F3) between the adhesive face (a) and an adherend (C), and a peel strength (F4) between the adhesive face (b) and an adherend (D) satisfy the relationship F1<F2<F3<F4.

In the above relationship formula, the difference between the peel strength (F1) and the peel strength (F2) ranges from 0.2 to 1.0 N/25 mm in terms of 180-degree peel adhesion in an adhesive strength test in accordance with JIS Z0237 "Testing Methods of Pressure-Sensitive Adhesive Tapes and Sheets". Preferably, the 180-degree peel adhesion difference between the peel strength (F2) and the peel strength (F3) is not smaller than 0.2 N/25 mm,

That is because when the peel strength difference of the release films vis-à-vis the transparent pressure-sensitive adhesive product for optical use is below the lower limit of the above range, peeling of the release films becomes unstable, since the release surface may then be on the side of either release film.

Preferably, the peel strength (F1) between the release film (A) and the adhesive face (a), and the peel strength (F2) between the release film (B) and the adhesive face (b) adhered to both faces of the transparent pressure-sensitive adhesive product for optical use of the present invention are both no greater than 5.0 N/25 mm. That is because when the peel strength exceeds 5.0 N/25 mm, the transparent pressure-sensitive adhesive product for optical use may break upon peeling of the release films.

To adjust the above peel strength, the relationship between the adhesive power (Ga) of the adhesive face (a) upon peeling of the release film (A), and the adhesive power (Gb) of the adhesive face (b) upon peeling of the release film (B) must satisfy the condition Ga<Gb. Satisfying this condition is effective for eliciting, stably and easily, peeling site selectivity on both faces of the transparent pressure-sensitive adhesive product during rework of the latter, when the transparent pressure-sensitive adhesive product is removed from an optical component and re-affixed.

Preferably, the adhesive power (Ga) and the adhesive power (Gb) have a ball number ranging from 3 to 15 according to the inclined ball tack test (inclination angle 30 degrees) set forth in JIS Z0237 ("Testing Methods of Pressure-Sensitive Adhesive Tapes and Sheets"), and the ball number difference between Ga and Gb ranges from 2 to 12. More preferably, the ball number difference ranges from 2 to 5. That is because during rework, when the transparent pressure-sensitive adhesive product is removed from the optical component and re-affixed, the removal face off the optical component is unstable in that it may be either face, if the adhesive power difference is smaller than 2. When the adhesive power difference exceeds 12, on the other hand, it may be hard to separate the optical component from the adhesive face (b) of the transparent pressure-sensitive adhesive product, which makes manufacture more difficult.

The adhesive power (Ga) and the adhesive power (Gb) are adjusted based on the type of material with which an uncured starting material of the silicone gel comes into contact, in an uncrosslinked state, before curing begins.

As the above-mentionedmaterial there can be used, for instance, a release film (a base material or a release-treated coating layer thereof), a gas such as air, or a liquid such as a wet coating layer applied on a release film. Herein, the phase combination may be a combination of same phases, such as solid phase-solid phase, or a combination of different phases, such as solid phase-gas phase, or solid phase-liquid phase. When eliciting Ga and Gb by bringing into contact different types of release film of identical phase, a smaller ball tack is achieved for a smaller surface energy of the release film surface with which the uncrosslinked silicone gel material comes into contact. In an example of solid phase-gas phase, with a portion in contact with a release film and cross-linking occurring in contact with air, the face in contact with air exhibits a smaller ball tack.

Adhesive strength and peel strength derived therefrom can be adjusted also based on differences in the amount of heating or in the amount of electromagnetic wave irradiation, in the form of UV rays or the like, which constitutes the applied energy that governs the cross-linking reaction characteristic of addition reaction-type silicone gels.

Also, a coating layer having a cross-linking agent of hydrogen polysiloxane as a main component may be applied to the face of a release film that comes into contact with the uncrosslinked silicone gel starting material, to adjust thereby the cross-linking degree of the surface of the uncrosslinked silicone gel starting material that comes into contact with the coating layer.

In conventional transparent pressure-sensitive adhesive tapes for optical use of two-face adhesive type, the adhesive characteristics of the front and rear faces of a pressure-sensitive adhesive layer were predominant, and the thickness of the pressure-sensitive adhesive layer had little influence, when the thickness of the pressure-sensitive adhesive product (portion of a pressure-sensitive adhesive layer excluding a release material on both faces of a two-face pressure-sensitive adhesive tape) was no greater than 100 µm. As the thickness of the product increased, however, tensile elastic deformation was likelier to occur in the pressure-sensitive adhesive product when an adherend or a release film was peeled off the pressure-sensitive adhesive product. This was problematic in that, when the pressure-sensitive adhesive product had viscoelasticity, in particular, the resulting peeling stress relieving effect was accompanied by a drop in peeling site stability.

By contrast, the transparent pressure-sensitive adhesive product for optical use of the present invention affords, as a matter of course, the above-mentioned peeling site stability at thicknesses of several tens of µm or more, which is the thickness range of conventional transparent pressure-sensitive adhesive tapes for optical use, but also peeling site stability, in particular, at thicknesses in excess of 100 µm, where viscoelastic characteristics of the transparent pressure-sensitive adhesive product exert an influence on peel strength.

The mechanism behind the above-described differential tackiness that characterizes the present invention is as yet unclear, but it is conjectured to arise from the effect of, among others, the molecular state (surface energy) at the interface formed through contact between the uncured silicone gel starting material and a material that comes into contact therewith, such as a release film, at the outermost surface of the contact substance, and/or the polarity (compatibility) of side chains or functional groups of the uncrosslinked silicone gel. These effects give rise to differences in the cross-linking structure in the vicinity of the interface, and to changes in the proportion of uncrosslinked functional groups, which translate into differences in tackiness observed at the macro scale.

The peel strength between the release films and the pressure-sensitive adhesive product is conjectured to arise, in addition to the above-described features accounting from differential tackiness, also from the effect of interfacial residual stress, derived from a history of thermal expansion and contraction at the interface between the silicone gel and the release film, and which corresponds to the thermal history of heating and cooling undergone during the cross-linking and curing process. This interfacial residual stress, which increases the adhesive strength at the interface (meshing effect between the release film and the silicone gel), is thought to contribute thus to the resulting differences in peel strength.

In the above-described peel strength F1 and F2, the peel strength in a case where the uncrosslinked silicone gel starting material is crosslinked in contact with a release film is different from the peel strength in a case where, after cross-linking as above, the release film is peeled off and the same or another release film is re-affixed. The peel strength becomes smaller in the latter case.

This is thought to arise from the fact that the interfacing bonding structure formed at the interface between a release film and the uncrosslinked silicone gel starting material in the curing process exerts a binding force on the interface until the structure is broken during the first peeling. However, the adhesive force generated through contact with the adhesive face (a or b) upon later affixing of the release film does not afford a binding force commensurate to the formation of the above-described peeling breakage face, and hence the peel strength becomes smaller than during initial peeling.

Therefore, it becomes necessary to optimize the combination of release films while adjusting the balance between Ga and Gb, in accordance with the below-described release types.

### (ii) Release film (A) and release film (B)

A release film (A) and a release film (B) are bonded to both faces of the transparent pressure-sensitive adhesive product for optical use of the present invention to yield a transparent pressure-sensitive adhesive laminate for optical use.

In the present invention, the definition of the release film (A) and the release film (B) encompasses broadly ordinarily used release sheets, surface protective films, release paper and the like. The release film (A) and the release film (B), which protect the adhesive face of the transparent pressure-sensitive adhesive product for optical use against debris, must be peeled during use.

The transparent pressure-sensitive adhesive product for optical use of the present invention has an adhesive face (a) onto which the release film (A) is adhered, and an adhesive face (b) onto which the release film (B) is adhered. Among the release film (A) and the release film (B) affixed to both faces of the transparent pressure-sensitive adhesive product for optical use of the present invention, the release film (A) is preferably an alkyd resin-based release film, and the release film (B) is a fluorosilicone-based release film, in order to satisfy the above-described peel strength relationship and adhesive power relationship.

Provided that the above-described peel strength relationship and adhesive power relationship are satisfied, the release film (A) and the release film (B) of the present invention are not limited to the above materials. For instance, the release film (A) and the release film (B) may be a film comprising an organic resin such as a polyether sulfone resin, a cellulose acetate resin, a polyimide resin, a polyester resin, a polyether resin, an epoxy resin, a phenolic resin, a polyamide resin or a polyolefin (for instance, polypropylene); a film resulting from laminating the foregoing organic resins with another organic resin; or a film resulting from covering the surface of another organic resin film with the foregoing organic resins. The peel strength difference of the release films in the transparent pressure-sensitive adhesive product for optical use can be appropriately adjusted by using a release film (A) and a release film (B) employing dissimilar materials, from among the above materials.

The functions of the release film (A) and the release film (B) may be embodied in a single release film by imparting dissimilar release characteristics to the front and rear faces of the release film in accordance with the above-described laminate structure and/or surface treatment. This is effective, in particular, when recovering the transparent pressure-sensitive adhesive laminate for optical use in the form of a roll, which is a manufacturing form of the laminate.

### 2. Transparent pressure-sensitive adhesive laminate for optical use and manufacturing method thereof

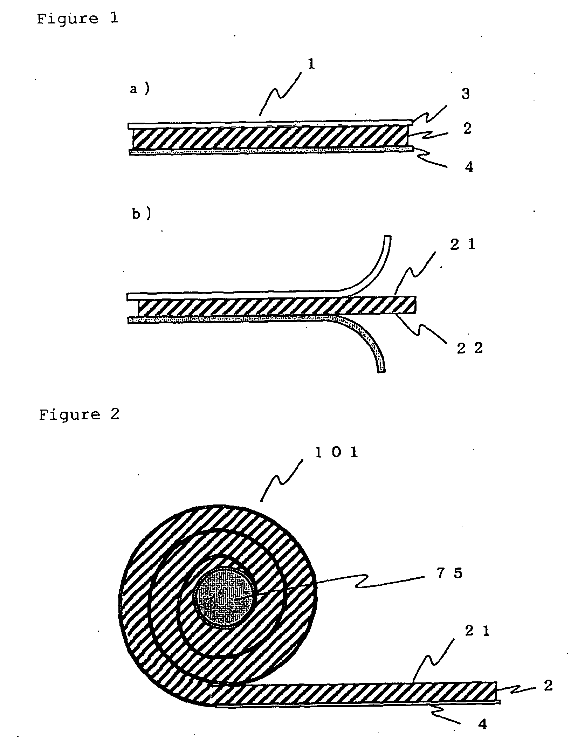

The transparent pressure-sensitive adhesive laminate for optical use of the present invention is obtained by laminating a release film (A) on the adhesive face (a), and a release film (B) on the adhesive face (b) of the above-described transparent pressure-sensitive adhesive product for optical use (see, for instance, Fig. 1).

In another embodiment, the transparent pressure-sensitive adhesive laminate for optical use may be obtained by laminating the release film (B) on the adhesive face (b) of the transparent pressure-sensitive adhesive product for optical use, followed by lamination, in the form of a roll, by bringing the rear face of the release film (B) into contact with the adhesive face (a) (see, for instance, Fig. 2).

Preferably, the method for manufacturing the transparent pressure-sensitive adhesive laminate for optical use of the present invention comprises the following steps.
(i) Amolding step of sandwiching an uncured liquid viscoelastic material between a release film (A) and a release film (B) and setting the thickness of the material; (ii) a heating step of heating and curing, after molding or simultaneously with molding; and (iii) a cooling step of cooling the cured sheet.

The above molding step (i) involves sandwiching an uncured liquid silicone gel starting material between the release film (A) and the release film (B) to bring into contact the uncured material with part or the entire surface of the release films, whereafter pressure is applied to the release film (A) and/or the release film (B), to set thereby a target silicone gel thickness. Herein, the faces of the release film (A) and the release film (B) that are brought into contact with the uncured silicone gel material are the faces at which there is elicited the tackiness and peel strength of the silicone gel (hereafter tackiness control faces) . The method for sandwiching the uncured liquid silicone gel starting material between the release film (A) and the release film (B), as well as the thickness setting method, are not particularly limited, and may be a pressing method, a calendering method or the like. The heating method may be a known heating method. The cooling step may involve natural cooling or may use known cooling equipment such as equipment for blasting cold air.

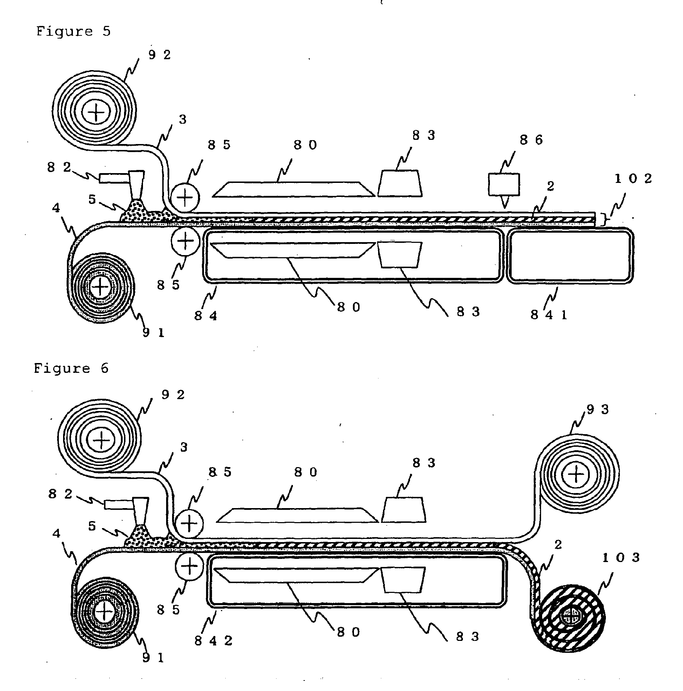

The steps (i) to (iii) above may each be carried out batch-wise (for instance, Fig. 3) or continuously (for instance, Fig. 5).

Preferably, the method for manufacturing the transparent pressure-sensitive adhesive laminate for optical use in another aspect of the present invention comprises the following steps.
(i) A molding step of supplying an uncured liquid viscoelastic material on a release film (B) and setting the thickness of the material; (ii) a heating step of opening, heating and curing a portion where at least the release film (A) is affixed, after molding or simultaneously with molding; (iii) a cooling step of cooling the cured sheet obtained in the heating and curing step; and (iv) a release film affixing step of affixing the release film (A) to the open face, heated and cured in the heating step.

In the molding step (i) there is formed an uncured layer of uncured liquid silicone gel starting material on the release film (B), to a substantially uniform thickness. A known coating method can be appropriately used as the thickness setting method. For instance, excellent mass productivity can be achieved by using, for instance, a blade coater.

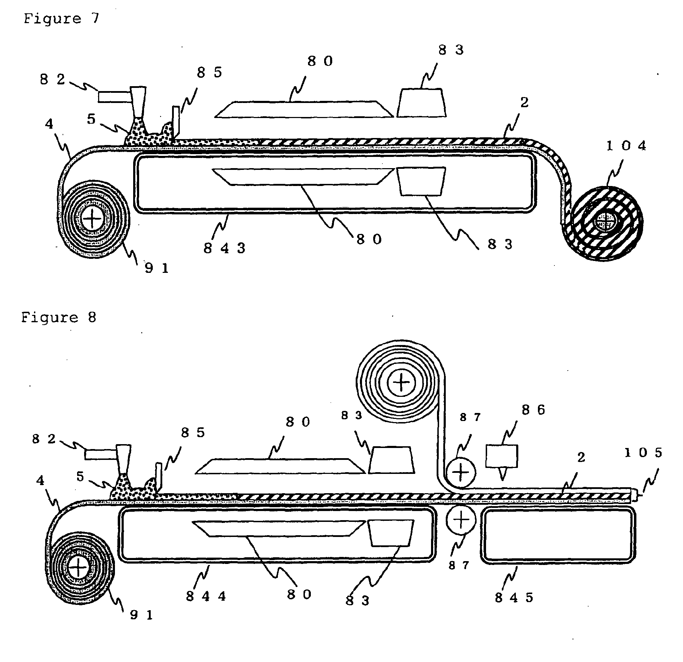

The steps (i) to (iii) above may each be carried out batch-wise (for instance, Fig. 4) or continuously. In the release film affixing step (iv) the release film (A)may be continuously supplied out of a roll, as illustrated in Fig. 8. In another method, a cooled sheet may be cut to a predetermined sheet, followed by affixing of the release film.

The release film (A) used in step (iv) may be same as the release film (B), provided that peel strength F1 < peel strength F2 and that the difference therebetween ranges from 0.2 to 1.0 N/25 mm.

Preferably, the method for manufacturing the transparent pressure-sensitive adhesive laminate for optical use in another aspect of the present invention comprises the following steps.
(i) A molding step of supplying an uncured liquid addition reaction-type silicone gel starting material onto a release film (B), and setting the thickness of the material; (ii) a heating step of heating and curing, while in contact with air, at least part of the surface of the uncured silicone gel starting material that is not in contact with the release film (B), after molding or simultaneously with molding; (iii) a cooling step of cooling the cured silicone gel obtained in the heating and curing step, together with the release film (B); and (iv) a winding step of winding to a roll shape together with the release film (B), with the adhesive face (a), having been formed by curing in contact with air in the heating step, in contact now with the rear face of the release film (B) (for instance, Fig. 7).

In the winding step, winding is carried out with the adhesive face (a) at the leading end portion of the manufactured cured sheet brought into close contact with a core member made of resin or the like, in such a manner so as to avoid wrinkling and entrapment of air. The winding method is not particularly limited, but using a roll winding device is preferred for mass production since tension can be adjusted thereby during winding. The softer the manufactured pressure-sensitive adhesive product for optical use, the likelier it is for the thickness of the optical transparent pressure-sensitive adhesive product to deform on account of compressive stress. Therefore, problems during winding can be forestalled by appropriately adjusting the winding speed and the winding tension. The peel strength difference at the close-contact surface between the adhesive face (a) and the rear face of the release film (B) can be achieved by subjecting the rear face of the release film (B) to a release treatment different from that of the release film (B) . A suitable such treatment of the rear face may involve imparting to the latter a lighter release than on the front face of the release film (B), for instance through an alkyd resin-based release treatment or a polypropylene thin film treatment.

Preferably, the method for manufacturing the transparent pressure-sensitive adhesive laminate for optical use in another aspect of the present invention comprises the following steps.
(i) A molding step of sandwiching an uncured liquid addition reaction-type silicone gel starting material between a release film (A) and a release film (B), and setting the thickness of the material; (ii) a heating step of heating and curing, after molding or simultaneously with molding; (iii) a cooling step of cooling the cured silicone gel obtained in the heating and curing step, together with the release film (A) and the release film (B); (iv) a peeling step of peeling the release film (A) off the cured silicone gel and exposing the adhesive face (a) ; and (v) a winding step of winding to a roll shape together with the release film (B), with the adhesive face (a) in contact with the rear face of the release film (B) (for instance, Fig. 8).

In the above-described various manufacturing method embodiments, the surface of the release film (A) that comes into contact with the transparent pressure-sensitive adhesive product is preferably subjected to an alkyd resin-based release treatment, while the face of the release film (B) that comes into contact with the transparent pressure-sensitive adhesive product is subjected to a fluorosilicone-based release treatment. When the transparent pressure-sensitive adhesive laminate for optical use is manufactured in the form of a roll, preferably, the face of the release film (B) that comes into contact with the transparent pressure-sensitive adhesive product is subjected to a fluorosilicone-based release treatment, while the rear face of the release film (B) is subjected to an alkyd resin-based release treatment.

In the heating steps of the above-described manufacturing method embodiments, the adhesive powers Ga and Gb are adjusted so as to be different by carrying out curing with the heating temperature on the release film (A) side being different from the heating temperature on the release film (B) side. Adhesive power is lower on the face side where the heating temperature is higher. The difference in heating temperature between the release film (A) side and the release film (B) side varies depending on the type of silicone starting material and the type of release film (coefficient of thermal expansion and heat resistance), but ranges preferably from 10 to 50°C, more preferably from 10 to 30°C. In terms of ensuring thickness precision, it is preferable to impart greater hardness, through a higher heating temperature, to the side that constitutes a lower face, with respect to gravity.

In the cooling steps of the above-described manufacturing method embodiments, the cooling gradients on the release film (A) side and the release film (B) are different, as a result of which there forms an interface adhesion structure (for instance, through adhesion or effect like biting of the silicone gel into the release films) that arises from the balance between the cooling contraction speed of the silicone gel and the cooling contraction speed of the release films. This feature is effective in transparent pressure-sensitive adhesive laminates for optical use of such types as are employed relying mainly on peel strength upon initial peeling. The way in which the cooling speed is controlled is not particularly limited, and may involve a blowing method using a blower or the like, or a contact method using a cooling plate.

### 3. Applications of the transparent pressure-sensitive adhesive product for optical use

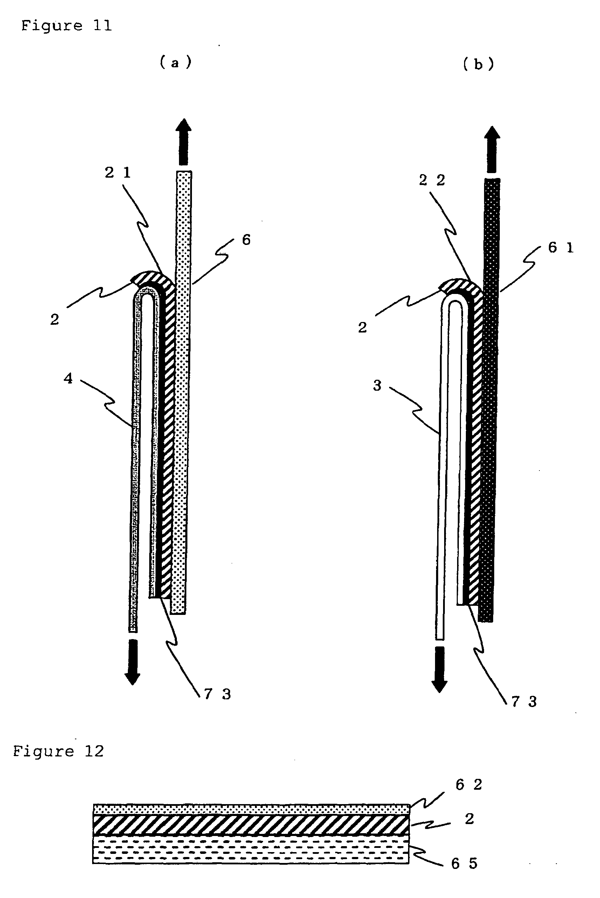

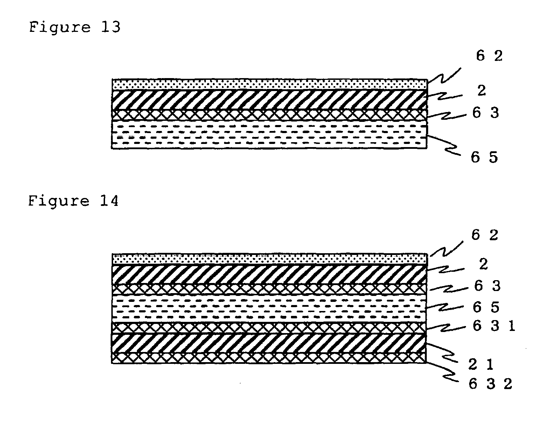

The transparent pressure-sensitive adhesive product for optical use of the present invention is used, for instance, between an image display device and a transparent protective panel. Combinations of an adherend (C) and an adherend (D) where the transparent pressure-sensitive adhesive product for optical use can be used, for instance, in the liquid crystal display of a cell phone, include a front panel made of resin, for instance an acrylic resin, and the glass surface of a liquid crystal panel (for instance, Fig. 11) ; or the above-mentioned front panel and polarizing sheet made of a resin such as TAC (for instance, Fig. 12); or two such polarizing sheets (for instance, Fig. 13). In plasma display panels (PDPs) or organic EL displays, the transparent pressure-sensitive adhesive product for optical use of the present invention can be employed to fill the space between light-emitting element surfaces and a front panel. Also, the transparent pressure-sensitive adhesive product for optical use of the present invention can be used as an optical coupling spacer in spaces where light scattering occurs, with a view to reducing transmission loss in the optical paths of other optical systems. The thickness is set in accordance with the application in question, and ranges suitably from 0.1 to 5.0 mm in, for instance, applications in the above-mentioned displays, preferably from 0.2 to 2.0 mm, in which case shock absorption is also elicited.

### Examples

The present invention will be explained in more detail below based on examples. The invention, however, is not limited to or by such examples.

### Example 1

A 200 mmx200 mmx2.0 mm thick transparent pressure-sensitive adhesive laminate for optical use was obtained by sequentially laminating a release film (A), a transparent pressure-sensitive adhesive product for optical use and a release film (B), by way of (i) a molding step of sandwiching an uncured liquid silicone gel starting material between a release film (A) and a release film (B); (ii) a heating step of heating and curing after molding; and (iii) a cooling step of cooling the cured sheet.

The uncured liquid silicone gel starting material was a two-liquid addition reaction-type silicone gel (type: SLJ3363, total transmittance in air 90%) by Wacker AsahiKasei Silicone Co. , Ltd. The release film (A) used was an alkyd resin-based release film (type: T-9, film thickness: 0.1 mm), by Panac Corp. The release film (B) used was a fluorosilicone-based release film (type: FZ, film thickness: 0.1 mm), by Unitica Ltd.

In the sequence of the molding step, the release film (B) was laid on a flat glass substrate, with the releasing face facing up; further, 2.0 mm thick spacers were placed at the four corners of the release film (B), to yield a molding lower die; a defoamed uncured liquid silicone gel starting material, being a two-liquid mixture, was poured onto the center of the release film (B), in such a manner so as to trap no air bubbles; next, the releasing face of the release film (A) was brought into contact with the surface of the liquid silicone gel starting material, so as to cover the latter, and in such a manner so as to trap no air bubbles; next, a flat glass plate, which constitutes an upper pressing die, was placed on the release film, and was pressed down manually to mold the material to the thickness of the spacers.

Next, the silicone gel starting material, together with the glass plates of the molding process, were heated and cured at 70°C for 1 hour in a hot air oven. Thereafter, the whole was taken out of the oven, the glass substrates were removed, and the resulting transparent pressure-sensitive adhesive laminate for optical use was left to cool naturally at room temperature (25°C) on a wooden board.

### Example 2

A 200 mmx200 mmx2.0 mm thick transparent pressure-sensitive adhesive laminate for optical use was obtained by sequentially laminating a release film (A), a transparent pressure-sensitive adhesive product for optical use and a release film (B), by way of (i) a molding step of supplying an uncured liquid viscoelastic material on a release film (B) and setting the thickness of the material; (ii) a heating step of, after molding, curing the open material without affixing a release film (A); (iii) a cooling step of cooling the cured sheet obtained in the heating and curing step; and (iv) a release film affixing step of affixing the release film (A) to the open face, heated and cured in the heating step.

To set the thickness in the molding step (i), the release film (B) was laid on a flat glass substrate, with the releasing face facing up; an aluminum frame spacer, having inner dimensions of 200 mm×200 mm and a thickness of 2.0 mm, was placed on the release film (B) ; an uncured silicone gel starting material was poured until filling the frame, after which the excess uncured silicone gel starting material was removed along the top face of the frame, using a squeegee.

This was followed next by thermal curing and cooling, under the same conditions as in Example 1, with the squeegee face in contact with air, and removal of the frame. Thereafter, a release film (A) was affixed to the face cured in contact with air.

The silicone gel, release film (A) and release film (B) used were the same as those of Example 1.

### Example 3

A 200 mm-wide roll-like transparent pressure-sensitive adhesive laminate for optical use was manufactured under the same conditions as in Example 2, but herein, the step of affixing the release film (A) to the face cured in contact with air was replaced by a winding step of winding together with the release film (B), with the face having been cured in contact with air, in the heating step, in contact now with the rear face of the release film (B), and except that the rear face of the release film (B) had been subj ected to an alkyd resin-based release treatment.

In the winding step, winding was carried out with the side of the face in contact with air brought now into close contact with a core member made of PVC and having an outer diameter of 20 mm, in such a manner so as to avoid wrinkling and entrapment of air.

### Example 4

A transparent pressure-sensitive adhesive laminate for optical use was manufactured in the same way as in Example 1, but herein the release film (B) used in Example 3 was used instead of the release film (B) of Example 1, and the heating temperature during the curing step was set at 100°C. Thereafter, the release film (A) was peeled off, and a winding step was carried out in the same way as in Example 3, to yield a 200 mm-wide, roll-like transparent pressure-sensitive adhesive laminate for optical use.

### Example 5

A transparent pressure-sensitive adhesive laminate for optical use was obtained in the same way as in Example 1, but herein the heating temperature was set at 100°C.

### Example 6

A transparent pressure-sensitive adhesive laminate for optical use was obtained in the same way as in Example 1, but herein the heating temperature was set at 120°C.

### Example 7

A transparent pressure-sensitive adhesive laminate for optical use was obtained in the same way as in Example 2, but herein the heating temperature was set at 100°C.

### Example 8

A transparent pressure-sensitive adhesive laminate for optical use was obtained in the same way as in Example 2, but herein the heating temperature was set at 120°C.

### Example 9

A transparent pressure-sensitive adhesive laminate for optical use was manufactured in the same way as in Example 6, but herein the two-liquid mixing ratio was adjusted in such a manner that the uncured liquid silicone gel starting material exhibited a hardness after curing corresponding to an Asker C hardness of 10.

### Example 10

A transparent pressure-sensitive adhesive laminate for optical use was manufactured in the same way as in Example 6, but herein the two-liquid mixing ratio was adjusted in such a manner that the uncured liquid silicone gel starting material exhibited a hardness after curing corresponding to a needle penetration depth of 60.

### Example 11

A transparent pressure-sensitive adhesive laminate for optical use was manufactured in the same way as in Example 6, but herein the uncured liquid silicone gel starting material was a two-liquid addition reaction-type silicone gel (TSE3070, total transmittance in air 90%), by Momentive Performance Materials Japan, having a needle penetration depth of 140 after curing.

### Example 12

A transparent pressure-sensitive adhesive laminate for optical use was manufactured in the same way as in Example 11, but herein the two-liquid mixing ratio was adjusted in such a manner that the uncured liquid silicone gel starting material exhibited a hardness after curing corresponding to a needle penetration depth of 190.

### Example 13

Atransparentpressure-sensitive adhesivelaminatefor optical use was manufactured in the same way as in Example 8, but herein the two-liquid mixing ratio was adjusted in such a manner that the uncured liquid silicone gel starting material exhibited a hardness after curing corresponding to an Asker C hardness of 25.

### Example 14

A transparent pressure-sensitive adhesive laminate for optical use was manufactured in the same way as in Example 1, but herein the release film (B) was replaced by the release film (A), the uncured liquid silicone gel starting material was molded with both faces thereof sandwiched between release films (A), and the heating conditions were 70°C on the side of the top release film (A) and 120°C on the side of the bottom release film (A).

### Example 15

A transparent pressure-sensitive adhesive laminate for optical use was manufactured in the same way as in Example 5, but herein the cooling conditions involved natural cooling at room temperature on the side of the release film (A), and forced cooling on the side of the release film (B) using a cold-water cooling plate at 10°C.

### Example 16

A transparent pressure-sensitive adhesive laminate for optical use was manufactured in the same way as in Example 2, but herein the two-liquid mixing ratio was adjusted by replacing the uncured liquid silicone gel starting material with a two-liquid addition reaction-type silicone gel (TSE3070, total transmittance in air 90%), by Momentive Performance Materials Japan, the curing temperature was 100°C, the hardness after curing yielded a needle penetration depth of 120, and the open-cured face was coated with a hydrogen polysiloxane oil, so that a ball tack test yielded a ball No. 3 result, as the tackiness characteristic Ga of the face cured in contact with air.

### Comparative example 1

A transparent pressure-sensitive adhesive laminate for optical use was obtained in the same way as in Example 6, but herein the release film (B) was replaced by the release film (A).

### Comparative example 2

A transparent pressure-sensitive adhesive laminate for optical use was obtained in the same way as in Example 9, but herein the release film (B) was replaced by the release film (A).

### Comparative example 3

A transparent pressure-sensitive adhesive laminate for optical use was manufactured in the same way as in Example 1, but herein the blending ratio of the uncured silicone gel was adjusted to adjust thereby the Gb of the adhesive face (b) so as to yield a ball No. 16 result in a ball tack test, and a hardness corresponding to a needle penetration depth of 210.

### Comparative example 4

A transparent pressure-sensitive adhesive laminate for optical use was manufactured in the same way as in Example 8, but herein the air-contact cured face was coated with a hydrogen polysiloxane oil, so that a ball tack test yielded a ball No. 2 result, as the tackiness characteristic Ga of the face cured in contact with air.

### Comparative example 5

A transparent pressure-sensitive adhesive laminate for optical use was manufactured in the same way as in Example 8, but herein the two-liquid mixing ratio was adjusted in such a manner that the uncured liquid silicone gel starting material exhibited a hardness after curing corresponding to an Asker C hardness of 32.

### (Evaluation):

The properties and performance of the transparent pressure-sensitive adhesive products for optical use and transparent pressure-sensitive adhesives laminate for optical use produced in Examples 1 to 15 and Comparative examples 1 to 5 were measured in accordance with the below-described evaluation methods. The evaluation results are given in Tables 1 to 3.

### (i) Adhesiveness (tackiness)

The adhesive power (Ga) and the adhesive power (Gb) were evaluated based on ball number, as determined in accordance with the inclined ball tack test in JIS Z0237 ("Testing Methods of Pressure-Sensitive Adhesive Tapes and Sheets"), in which a specimen is affixed to a 30-degree inclined plate, a ball rolls over the surface of the specimen, and there is noted the largest ball number among the balls that come to a stop within a measurement portion after 300 seconds.

### (ii) Release stability:

Release stability was sequentially evaluated according to the following evaluation steps.

### Evaluation step (I):

The release film (A) was peeled off the optical transparent pressure-sensitive adhesive laminate, to expose the adhesive face (a) . If only the release film (A) could be peeled but not the release film (B), the rating was O (good). If the release film (B) peeled even slightly, the rating was × (poor).

### Evaluation step (II):

A 1 mm-thick acrylic plate (MR-200 L-001 by Mitsubishi Rayon) as an adherend (C) was affixed to the adhesive face (a) while ensuring that no foreign matter or air bubbles became trapped. Thereafter, the adhesive face (b) was exposed by peeling off the release film (B) while the adherend (C) was fixed with the hands. If only the release film (B) could be peeled off without peeling on the adhesion surface between the adherend (C) and the adhesive face (a), the rating was O, while if the adhesion surface between the adherend (C) and the adhesive face (a) peeled even slightly, the rating was ×.

### Evaluation step (III):

A 1 mm-thick commercially available float glass plate (float glass manufactured by Nippon Sheet Glass, corresponding to JIS R3202, with no visually detectable surface damage), as an adherend (D), was affixed to the adhesive face (b) while ensuring that no foreign matter or air bubbles became trapped. After being left to sand for 1 hour at room temperature, the adherend (C) was peeled off of while the adherend (D) was fixed with the hands. If only the adherend (C) could be peeled off without peeling on the side of the adherend (D), the rating was O, if the adherend (D) side exhibited even slight peeling, the rating was ×.

In each evaluation step there were used 5 samples. The rating was O only when all the samples peeled from the same side. Peeling at the opposite side in even one sample was rated as ×. The evaluation was ended upon obtention of a × rating.

### (iii) Peel strength:

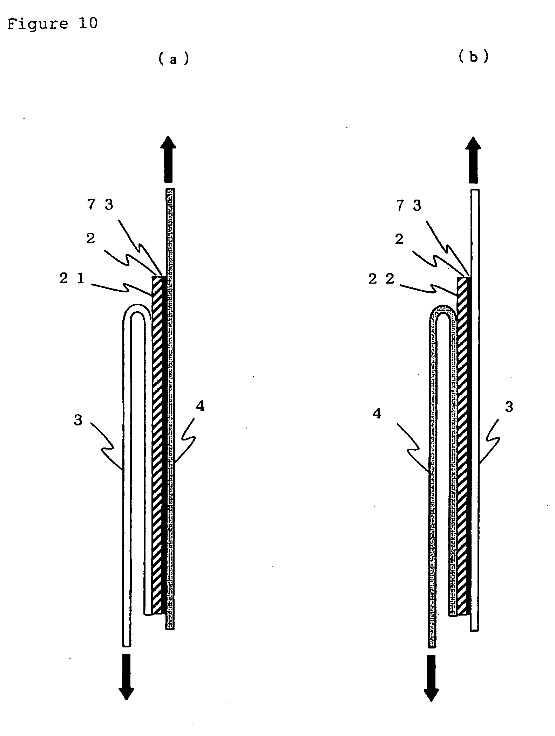

The peel strength (F1), peel strength (F2), peel strength (F3) and peel strength (F4) were measured as 180-degree peel adhesion in an adhesive strength test in accordance with JIS Z0237 "Testing Methods of Pressure-Sensitive Adhesive Tapes and Sheets", using a 180-degree peel tester at a pulling speed of 300 mm/min. In the test samples for evaluation of peel strength (F1) and peel strength (F2), as illustrated in Figs. 10 (a) and 10(b), an uncured silicone gel starting material was adhered, via a primer, to a release film on the face opposite the face to be measured. The uncured silicone gel was cured under the formation, heating and cooling conditions of Examples 1 to 15 and Comparative examples 1 to 5. Once the surface temperature of the cured face dropped to 23°C, the sample was left to stand for further 24 hours (evaluation sample type X).

As regards the test samples for evaluation of peel strength (F3) andpeel strength (F4), after preparation of the above evaluation samples type X the release film was peeled off to form an adhesive face to be measured, in examples where the release film was adhered to the face to be measured (samples type X remaining as-is in the examples cured under open conditions). Next, the surface of the adherend (C or D) was wiped clean with ethanol, and the adhesive face to be measured of the evaluation sample type X was affixed to the resulting clean surface, to yield an evaluation sample (evaluation sample type Y), as illustrated in Figs. 11 (a) and 11 (b). The affixing conditions involved a 2 kg roller passing to and fro once, at a speed of 300 mm/min, over the sample, which was then left to stand for 20 to 40 minutes at 23°C.

The adherends were a 1 mm-thick acrylic plate (MR-200 L-001 by Mitsubishi Rayon) and a 1 mm-thick commercially available float glass plate (float glass manufactured by Nippon Sheet Glass, corresponding to JIS R3202, with no visually detectable surface damage).

### (iv) Other properties, performance

Hardness: hardness was determined using the Asker C hardness measuring method according to the SRIS 0101 standard, or the needle penetration depth measuring method according to JIS K2207"Petroleum Asphalts". An Asker C hardness meter was used when the needle penetration depth was less than 20. A needle penetration depth meter was used when the Asker C hardness was 0.

**Table 1**

| | | Example 1 | Example 2 | Example 3 | Example 4 | Example 5 | Example 6 | Example 7 | Example 8 |
|---|---|---|---|---|---|---|---|---|---|
| Starting material | Silicone | SLJ3363 | SLJ3363 | SLJ3363 | SLJ3363 | SLJ3363 | SLJ3363 | SLJ3363 | SLJ3363 |
| Curing conditions | Release film (upper) | A | None | None | A | A | A | None | None |
| | Release film (Lower) | B | B | B/A | B/A | B | B | B/A | B |
| | Curing temperature (°C) | 70 | 70 | 100 | 100 | 100 | 120 | 100 | 120 |
| | Lower face cooling speed | Same as upper face | Same as upper face | Same as upper face | Same as upper face | Same as upper face | Same as upper face | Same as upper face | Same as upper face |
| Hardness | (Asker C) | 5 | 5 | 5 | 10 | 5 | 5 | 5 | 5 |
| | (Needle penetration depth) | - | - | - | - | - | - | - | - |
| Tack test | Ga | No. 7 | No. 10 | No. 7 | No. 6 | No. 7 | No. 7 | No. 8 | No. 7 |
| | Gb | No. 12 | No. 12 | No. 10 | No. 9 | No. 11 | No. 10 | No. 11 | No. 10 |
| Peel strength measurement | F1 (N/25mm) | 0.3 | 0.3 | 0.1 | 0.1 | 0.2 | 0.2 | 0.2 | 0.2 |
| | F2 (N/25mm) | 1.0 | 1.0 | 0.8 | 0.6 | 0.8 | 0.8 | 0.8 | 0.8 |
| | F3 (N/25mm) | 1.6 | 2.5 | 1.2 | 1.2 | 1.5 | 1.2 | 2.0 | 1.2 |
| | F4 (N/25mm) | 3.0 | 3.0 | 2.8 | 2.8 | 3.0 | 3.0 | 3.0 | 2.8 |
| Release stability evaluation | Evaluation step I | O | O | O | O | O | O | O | O |
| | Evaluation step II | O | O | O | O | O | O | O | O |
| | Evaluation step III | O | O | O | O | O | O | O | O |

**Table 2**

| | | Example 9 | Example 10 | Example 11 | Example 12 | Example 13 | Example 14 | Example 15 | Example 16 |
|---|---|---|---|---|---|---|---|---|---|
| Starting material | Silicone | SLJ3363 | SJ3363 | TSE3070 | TSE3070 | SLJ3363 | SLJ3363 | SLJ3363 | TSE3070 |
| Curing conditions | Release film (upper) | A | A | A | A | None | A | A | None |
| | Release film (Lower) | B | B | B | B | B | B | B | B |
| | Curing temperature (°C) | 120 | 120 | 120 | 120 | 120 | 70/120 | 100 | 100 |
| | Lower face cooling speed | Same as upper face | Same as upper face | Same as upper face | Same as upper face | Same as upper face | Same as upper face | Lower face x2 | Same as upper face |
| Hardness | (Asker C) | 10 | - | - | - | 25 | 7 | 5 | - |
| | (Needle penetration depth) | - | 60 | 140 | 190 | - | - | - | 120 |
| Tack test | Ga | No. 3 | No. 3 | No. 8 | No. 10 | No. 3 | No. 10 | No. 8 | No. 3 |
| | Gb | No. 6 | No. 6 | No. 10 | No. 12 | No. 5 | No. 12 | No. 11 | No. 15 |
| Peel strength measurement | F1 (N/25mm) | 0.1 | 0.1 | 0.2 | 0.3 | 0.1 | 0.1 | 0.1 | 0.1 |
| | F2 (N/25mm) | 0.6 | 0.6 | 1.0 | 1.0 | 0.3 | 1.0 | 1.0 | 1.1 |
| | F3 (N/25mm) | 1.2 | 1.0 | 1.8 | 2.3 | 1.2 | 1.2 | 1.5 | 1.5 |
| | F4 (N/25mm) | 2.2 | 1.8 | 2.8 | 3.0 | 1.5 | 3.0 | 3.0 | 3.0 |
| Release stability evaluation | Evaluation step I | O | O | O | O | O | O | O | O |
| | Evaluation step II | O | O | O | O | O | O | O | O |
| | Evaluation step III | O | O | O | O | O | O | O | O |

**Table 3**

| | | Comparative example 1 | Comparative example 2 | Comparative example 3 | Comparative example 4 | Comparative example 5 |
|---|---|---|---|---|---|---|
| Starting material | Silicone | SLJ3363 | SLJ3363 | SLJ3363 | SLJ3363 | SLJ3363 |
| Curing conditions | Release film (upper) | B | B | A | None | None |
| | Release film (Lower) | B | B | B | B | B |
| | Curing temperature (°C) | 120 | 120 | 70 | 120 | 120 |
| | Lower face cooling speed | | | | | |
| Hardness | (Asker C) | 5 | 10 | - | 10 | 32 |
| | (Needle penetration depth) | - | - | 210 | - | - |
| Tack test | Ga | No. 10 | No. 6 | No. 16 | No. 2 | No. 3 |
| | Gb | No. 10 | No. 6 | No. 20 | No. 6 | No. 4 |
| Peel strength measurement | F1 (N/25mm) | 1.0 | 0.6 | 5.5 | <0.1 | 0.1 |
| | F2 (N/25mm) | 1.0 | 0.6 | 7.0 | 0.6 | 0.2 |
| | F3 (N/25mm) | 2.8 | 2.2 | - | 1.2 | 1.0 |
| | F4 (N/25mm) | 2.8 | 2.2 | - | 2.2 | 1.5 |
| Release stability evaluation | Evaluation step I | × | × | No release | ○ | × |
| | Evaluation step II | - | - | - | × | - |
| | Evaluation step III | - | - | - | - | - |

As the evaluation results from Tables 1 and 2 show, carrying out thermal curing using dissimilar types of release films, which are brought into contact with the uncured silicone gel starting material, has the effect of allowing the tackiness of the tackiness characteristic face of the obtained transparent pressure-sensitive adhesive products for optical use to be adjusted, on the basis of the type of release film, and also the effect of affording stable peeling of the release film only on one face of a transparent pressure-sensitive adhesive laminate for optical use having affixed thereto a release film (A) and a release film (B).

The results show also that stable peeling selectivity is achieved, in a series of peeling and affixing operations, by setting the tackiness characteristic Ga of the adhesive face (a) and the tackiness characteristic Gb of the adhesive face (b) of the transparent pressure-sensitive adhesive product for optical use to be Ga<Gb, by setting a ball number range of 3 to 15 for Ga and Gb, and by setting a ball number difference of 2 to 12 between Ga and Gb, in the inclined ball tack test (inclination angle 30 degrees) according to JIS Z0237. In rework operations as well, peeling on a single face (low peel strength side) was stable, regardless of the type of adherend.

Moreover, although the above effects are elicited irrespective of the type or hardness of the silicone gel, release stability tests revealed that a target release stability is achieved within the ranges of peel strength, peel strength difference, and hardness, as set forth in the fourth invention, the fifth invention and the sixth invention.

The above-described release stability could be realized in all the manufacturing methods of the tenth to thirteenth inventions. It has also been found that release stability can be adjusted depending on the heating temperature and cooling speed during the curing step.

In particular, a superior combination with release films is achieved when the release film (A) is an alkyd resin-based release film and the release film (B) is a fluorosilicone-based release film.

As is the case in Comparative examples 1 to 5, whose evaluation results are given in Table 3, no release stability at all was obtained when the adhesive is sandwiched between the same release films and thermal curing is carried out under the same conditions. Also, no stable release characteristics were achieved in peeling operations, from peeling of the release film (A) up to rework, when the peel strength, pressure-sensitive adhesive characteristics and hardness lay outside the ranges of the present invention.

The transparent pressure-sensitive adhesive product for optical use of the present invention affords stable peeling site selectivity between release films and both sides of a transparent pressure-sensitive adhesive product during affixing, and affords, in a stable and easy manner, peeling site selectivity on both faces of a transparent pressure-sensitive adhesive product during rework, when the transparent pressure-sensitive adhesive product sheet is removed from an optical component and is re-affixed. Therefore, the transparent pressure-sensitive adhesive product for optical use of the present invention can be suitably used with a wide variety of optical components, in particular in displays or the like.

With recycling also in mind, the transparent pressure-sensitive adhesive product for optical use of the present invention helps recovering image display elements efficiently through stabilization of peeling site selectivity.

## Claims

1. A transparent pressure-sensitive adhesive product for optical use, having an adhesive face (a) and an adhesive face (b) of dissimilar tackiness, and formed of an addition reaction-type silicone gel, wherein
a relationship between an adhesive power (Ga) of the adhesive face (a) and an adhesive power (Gb) of the adhesive face (b) is Ga<Gb,
the adhesive power (Ga) and the adhesive power (Gb) yield a ball number from 3 to 15 and a ball number difference from 2 to 12, in an inclined ball tack test (inclination angle 30 degrees) according to JIS Z0237, and
the adhesive face (a) and the adhesive face (b) are formed by heating and curing an uncured starting material of said addition reaction-type silicone gel brought into close contact with a release film (A) and a release film (B) of dissimilar types.

2. A transparent pressure-sensitive adhesive product for optical use, having an adhesive face (a) and an adhesive face (b) of dissimilar tackiness, and formed of an addition reaction-type silicone gel, wherein
a relationship between an adhesive power (Ga) of the adhesive face (a) and an adhesive power (Gb) of the adhesive face (b) is Ga<Gb,
the adhesive power (Ga) and the adhesive power (Gb) yield a ball number from 3 to 15 and a ball number difference from 2 to 12, in an inclined ball tack test (inclination angle 30 degrees) according to JIS Z0237, and
the adhesive face (a) is formed by heating and curing an uncured starting material of said addition reaction-type silicone gel that is brought into contact with air, and the adhesive face (b) is formed by heating and curing the uncured starting material brought into close contact with a release film (B).

3. The transparent pressure-sensitive adhesive product for optical use according to claim 1 or 2, wherein a relationship between a peel strength (F1) between the release film (A) and the adhesive face (a), a peel strength (F2) between the release film (B) and the adhesive face (b), and a peel strength (F3) between the adhesive face (a) and an adherend (C) is such that a 180-degree peel adhesion difference between the peel strength (F1) and the peel strength (F2) ranges from 0.2 to 1.0 N/25 mm, and the 180-degree peel adhesion difference between the peel strength (F2) and the peel strength (F3) is not smaller than 0.2 N/25 mm, in an adhesive strength test in accordance with JIS Z0237

4. The transparent pressure-sensitive adhesive product for optical use according to claim 3, wherein a relationship between the peel strength (F3) and a peel strength (F4) between the adhesive face (b) and an adherend (D) is such that the 180-degree peel adhesion difference between the peel strength (F3) and the peel strength (F4) is not smaller than 0.2 N/25 mm, in an adhesive strength test in accordance with JIS Z0237.

5. The transparent pressure-sensitive adhesive product for optical use according to claim 1 or 2, wherein the hardness of said silicone gel is an Asker C hardness of 0 to 30, according to the SRIS 0101 standard, or a needle penetration depth (25°C) of 20 to 200 according to JIS K2207.

6. The transparent pressure-sensitive adhesive product for optical use according to claim 5, wherein the transmittance of said silicone gel at a wavelength of 380 to 780 nm is not lower than 80%.

7. The transparent pressure-sensitive adhesive product for optical use according to claim 1 or 2, wherein the release film (A) is an alkyd resin-based release film, and the release film (B) is a fluorosilicone-based release film.

8. A transparent pressure-sensitive adhesive laminate for optical use, which is obtained by laminating a release film (A) on the adhesive face (a), and a release film (B) on the adhesive face (b), of the transparent pressure-sensitive adhesive product for optical use according to claim 1 or 2.

9. A transparent pressure-sensitive adhesive laminate for optical use, which is obtained by laminating a release film (B) on the adhesive face (b) of the transparent pressure-sensitive adhesive product for optical use according to claim 1 or 2 to yield a roll-shape laminate in which the rear face of the release film (B) is in contact with the adhesive face (a).

10. A method for manufacturing the transparent pressure-sensitive adhesive laminate for optical use according to claim 8, the method comprising:
a molding step of sandwiching an uncured liquid addition reaction-type silicone gel starting material between the release film (A) and the release film (B), and setting the thickness of the material;
a heating step of heating and curing, after molding or simultaneously with molding; and
a cooling step of cooling the cured silicone gel obtained in the heating and curing step, together with the release film (A) and the release film (B).

11. The method for manufacturing the transparent pressure-sensitive adhesive laminate for optical use according to claim 8, the method comprising:
a molding step of supplying an uncured liquid addition reaction-type silicone gel starting material onto the release film (B), and setting the thickness of the material;
a heating step of heating and curing, while in contact with air, at least part of the surface of the uncured silicone gel starting material that is not in contact with the release film (B), after molding or simultaneously with molding;
a cooling step of cooling the cured silicone gel obtained in said heating and curing step, together with the release film (B) ; and
a release film affixing step of affixing the release film (A) to the face heated and cured in contact with air in said heating step.

12. A method for manufacturing the transparent pressure-sensitive adhesive laminate for optical use according to claim 9, the method comprising:
a molding step of supplying an uncured liquid addition reaction-type silicone gel starting material onto the release film (B), and setting the thickness of the material;
a heating step of heating and curing, while in contact with air, at least part of the surface of the uncured silicone gel starting material that is not in contact with the release film (B), after molding or simultaneously with molding;
a cooling step of cooling the cured silicone gel obtained in said heating and curing step, together with the release film (B); and
a winding step of winding the release film (B), with the adhesive face (a) formed by curing in contact with air in said heating step and being in contact with the rear face of the release film (B).

13. A method for manufacturing the transparent pressure-sensitive adhesive laminate for optical use according to claim 9, the method comprising:
a molding step of sandwiching an uncured liquid addition reaction-type silicone gel starting material between the release film (A) and the release film (B), and setting the thickness of the material;
a heating step of heating and curing, after molding or simultaneously with molding;
a cooling step of cooling the cured silicone gel obtained in said heating and curing step, together with the release film (A) and the release film (B);
a peeling step of peeling the release film (A) off the cured silicone gel and exposing the adhesive face (a); and
a winding step of winding to a roll shape together with the release film (B), with the adhesive face (a) in contact with the rear face of the release film (B).

14. The method for manufacturing a transparent pressure-sensitive adhesive product for optical use according to claim 10 or 11, wherein the face of the release film (A) that comes into contact with the transparent pressure-sensitive adhesive product is subjected to an alkyd resin-based release treatment, and the face of the release film (B) that comes into contact with the transparent pressure-sensitive adhesive product is subjected to a fluorosilicone-based release treatment.

15. The method for manufacturing a transparent pressure-sensitive adhesive product for optical use according to claim 12 or 13, wherein the face of the release film (B) that comes into contact with the transparent pressure-sensitive adhesive product is subjected to a fluorosilicone-based release treatment, and the rear face of the release film (B) is subjected to an alkyd resin-based release treatment.

16. The method for manufacturing the transparent pressure-sensitive adhesive product for optical use according to any one of claims 10 to 13, wherein in said heating step, the heating temperature on the side at which said uncured silicone gel starting material is in contact with the release film (A) or air is different from the heating temperature on the side at which said uncured silicone gel starting material is in contact with the release film (B).

17. The method for manufacturing the transparent pressure-sensitive adhesive product for optical use according to any one of claims 10 to 13, wherein in said cooling step, the cooling speed gradient on the side at which said cured silicone gel is in contact with the release film (A) or air is different from that on the side at which said cured silicone gel is in contact with the release film (B).

## Patentansprüche

1. Transparentes druckempfindliches Haftmittelprodukt zur optischen Verwendung, welches eine Haftmittelseite (a) und eine Haftmittelseite (b) mit unterschiedlicher Haftfähigkeit aufweist, und welches aus einem Silicongel vom Additionsreaktions-Typ gebildet ist, wobei
eine Beziehung zwischen einer Haftkraft (Ga) der Haftmittelseite (a) und einer Haftkraft (Gb) der Haftmittelseite (b) Ga<Gb ist,
die Haftkraft (Ga) und die Haftkraft (Gb) eine Ballzahl von 3 bis 15 und eine Ballzahldifferenz von 2 bis 12 in einem Geneigter-Ball-Haftungstest (Neigungswinkel 30 Grad) nach JIS Z0237 ergeben und
die Haftmittelseite (a) und die Haftmittelseite (b) durch Erwärmen und Härten eines ungehärteten Ausgangsmaterials des Silicongels vom Additionsreaktions-Typ, welches in engem Kontakt mit einer Abziehfolie (A) und einer Abziehfolie (B) verschiedener Typen gebracht wird, gebildet werden.

2. Transparentes druckempfindliches Haftmittelprodukt zur optischen Verwendung, welches eine Haftmittelseite (a) und eine Haftmittelseite (b) mit unterschiedlicher Haftfähigkeit aufweist, und welches aus einem Silicongel vom Additionsreaktions-Typ gebildet ist, wobei
eine Beziehung zwischen einer Haftkraft (Ga) der Haftmittelseite (a) und einer Haftkraft (Gb) der Haftmittelseite (b) Ga<Gb ist,
die Haftkraft (Ga) und die Haftkraft (Gb) eine Ballzahl von 3 bis 15 und eine Ballzahldifferenz von 2 bis 12 in einem Geneigter-Ball-Haftungstest (Neigungswinkel 30 Grad) nach JIS Z0237 ergeben und
die Haftmittelseite (a) durch Erwärmen und Härten eines ungehärteten Ausgangsmaterials des Silicongels vom Additionsreaktions-Typ, welches mit Luft in Kontakt gebracht wird, gebildet wird und die Haftmittelseite (b) durch Erwärmen und Härten des ungehärteten Ausgangsmaterials, welches in engen Kontakt mit einer Abziehfolie (B) gebracht wird, gebildet wird.

3. Transparentes druckempfindliches Haftmittelprodukt zur optischen Verwendung nach Anspruch 1 oder 2, wobei eine Beziehung zwischen einer Schälfestigkeit (F1) zwischen der Abziehfolie (A) und der Haftmittelseite (a), einer Schälfestigkeit (F2) zwischen der Abziehfolie (B) und der Haftmittelseite (b) und eine Schälfestigkeit (F3) zwischen der Haftmittelseite (a) und einem Adhärenden (C) so ist, dass in einem Haftmittelstärketest gemäß JIS Z0237 eine 180-Grad-Schälhaftungsdifferenz zwischen der Schälfestigkeit (F1) und der Schälfestigkeit (F2) 0,2 bis 1,0 N/25 mm beträgt und die 180-Grad-Schälhaftungsdifferenz zwischen der Schälfestigkeit (F2) und der Schälfestigkeit (F3) nicht kleiner als 0,2 N/25 mm ist.

4. Transparentes druckempfindliches Haftmittelprodukt zur optischen Verwendung nach Anspruch 3, wobei eine Beziehung zwischen der Schälfestigkeit (F3) und einer Schälfestigkeit (F4) zwischen der Haftmittelseite (b) und einem Adhärenden (D) derart ist, dass in einem Haftmittelstärketest gemäß JIS Z0237 die 180-Grad-Schälhaftungsdifferenz zwischen der Schälfestigkeit (F3) und der Schälfestigkeit (F4) nicht kleiner als 0,2 N/25 mm ist.

5. Transparentes druckempfindliches Haftmittelprodukt zur optischen Verwendung nach Anspruch 1 oder 2, wobei die Härte des Silicongels eine Asker-C-Härte von 0 bis 30 gemäß der Norm SRIS 0101 ist oder eine Nadel-Eindringtiefe (25°C) von 20 bis 200 nach JIS K2207 ist.

6. Transparentes druckempfindliches Haftmittelprodukt zur optischen Verwendung nach Anspruch 5, wobei der Transmissionsgrad des Silicongels bei einer Wellenlänge von 380 bis 780 nm nicht weniger als 80% beträgt.

7. Transparentes druckempfindliches Haftmittelprodukt zur optischen Verwendung nach Anspruch 1 oder 2, wobei die Abziehfolie (A) eine Abziehfolie auf Alkydharzbasis ist und die Abziehfolie (B) eine Abziehfolie auf Fluorsiliconbasis ist.

8. Transparentes druckempfindliches Haftmittellaminat zur optischen Verwendung, welches durch Laminieren einer Abziehfolie (A) auf die Haftmittelseite (a) und einer Abziehfolie (B) auf die Haftmittelseite (b) des transparenten druckempfindlichen Haftmittelprodukts zur optischen Verwendung nach Anspruch 1 oder 2 erhalten wird.

9. Transparentes druckempfindliches Haftmittellaminat zur optischen Verwendung, welches durch Laminieren einer Abziehfolie (B) auf die Haftmittelseite (b) des transparenten druckempfindlichen Haftmittelprodukts zur optischen Verwendung nach Anspruch 1 oder 2 erhalten wird, um ein Laminat in Rollenform, worin die Rückseite der Abziehfolie (B) in Kontakt mit der Haftmittelseite (a) ist, zu erhalten.

10. Verfahren zur Herstellung eines transparenten druckempfindlichen Haftmittellaminats zur optischen Verwendung nach Anspruch 8, wobei das Verfahren umfasst:
einen Formschritt des Anordnens eines Ausgangsmaterials eines ungehärteten flüssigen Silicongels vom Additionsreaktions-Typ zwischen die Abziehfolie (A) und die Abziehfolie (B) und des Einstellens der Dicke des Materials,
einen Erwärmschritt des Erwärmens und Härtens, nach dem Formen oder gleichzeitig mit dem Formen, und
einen Kühlschritt des Kühlens des gehärteten Silicongels, erhalten in dem Schritt des Erwärmens und Härtens, zusammen mit der Abziehfolie (A) und der Abziehfolie (B).

11. Verfahren zur Herstellung des transparenten druckempfindlichen Haftmittellaminats zur optischen Verwendung nach Anspruch 8, wobei das Verfahren umfasst:
einen Formschritt des Aufbringens eines Ausgangsmaterials eines ungehärteten flüssigen Silicongels vom Additionsreaktions-Typ auf die Abziehfolie (B) und des Einstellens der Dicke des Materials,
einen Erwärmschritt des Erwärmens und Härtens, während in Kontakt mit Luft, mindestens eines Teils der Oberfläche des ungehärteten Silicongel-Ausgangsmaterials, welches nicht in Kontakt mit der Abziehfolie (B) ist, nach dem Formen oder gleichzeitig mit dem Formen,
einen Kühlschritt des Kühlens des gehärteten Silicongels, erhalten in dem Schritt des Erwärmens und Härtens, zusammen mit der Abziehfolie (B), und
einen Abziehfolie-Anfügeschritt des Anfügens der Abziehfolie (A) an die Seite, die in dem Erwärmschritt in Kontakt mit Luft erwärmt und gehärtet wird.

12. Verfahren zur Herstellung eines transparenten druckempfindlichen Haftmittellaminats zur optischen Verwendung nach Anspruch 9, das Verfahren umfassend:
einen Formschritt des Aufbringens eines Ausgangsmaterials eines ungehärteten flüssigen Silicongels vom Additionsreaktions-Typ auf die Abziehfolie (B) und des Einstellens der Dicke des Materials,
einen Erwärmschritt des Erwärmens und Härtens, während in Kontakt mit Luft, mindestens eines Teils der Oberfläche des ungehärteten Silicongel-Ausgangsmaterials, welches nicht in Kontakt mit der Abziehfolie (B) ist, nach dem Formen oder gleichzeitig mit den Formen,
einen Kühlschritt des Kühlens des gehärteten Silicongels, erhalten in dem Schritt des Erwärmens und Härtens, zusammen mit der Abziehfolie (B) und
einen Aufrollschritt des Aufrollens der Abziehfolie (B) mit der Haftmittelseite (a), die durch Härten in Kontakt mit Luft in dem Erwärmschritt gebildet wird und in Kontakt mit der Rückseite der Abziehfolie (B) ist.

13. Verfahren zur Herstellung des transparenten druckempfindlichen Haftmittellaminats zur optischen Verwendung nach Anspruch 9, das Verfahren umfassend:
einen Formschritt des Anordnens eines Ausgangsmaterials eines ungehärteten flüssigen Silicongels vom Additionsreaktionstyp zwischen die Abziehfolie (A) und die Abziehfolie (B) und des Einstellens der Dicke des Materials,
einen Erwärmschritt des Erwärmens und Härtens, nach dem Formen oder gleichzeitig mit dem Formen,
einen Kühlschritt des Kühlens des gehärteten Silicongels, erhalten in dem Schritt des Erwärmens und Härtens, zusammen mit der Abziehfolie (A) und der Abziehfolie (B),
einen Abziehschritt des Abziehens der Abziehfolie (A) von dem gehärteten Sili-congel und des Freilegens der Haftmittelseite (a) und
einen Aufrollschritt des Aufrollens zu einer Rollenform, zusammen mit der Abziehfolie (B), wobei die Haftmittelseite (a) in Kontakt mit der Rückseite der Abziehfolie (B) ist.

14. Verfahren zur Herstellung eines transparenten druckempfindlichen Haftmittelprodukts zur optischen Verwendung nach Anspruch 10 oder 11, wobei die Seite der Abziehfolie (A), welche mit dem transparenten druckempfindlichen Haftmittelprodukt in Kontakt kommt, einer Abzieh-Behandlung auf Alkydharzbasis unterzogen wird und die Seite der Abziehfolie (B), welche mit dem transparenten druckempfindlichen Haftmittelprodukt in Kontakt kommt, einer Abzieh-Behandlung auf Fluorsiliconbasis unterzogen wird.

15. Verfahren zur Herstellung eines transparenten druckempfindlichen Haftmittelprodukts zur optischen Verwendung nach Anspruch 12 oder 13, wobei die Seite der Abziehfolie (B), welche mit dem transparenten druckempfindlichen Haftmittelprodukt in Kontakt kommt, einer Abzieh-Behandlung auf Fluorsiliconbasis unterzogen wird und die Rückseite der Abziehfolie (B) einer Abzieh-Behandlung auf Alkydharzbasis unterzogen wird.

16. Verfahren zur Herstellung eines transparenten druckempfindlichen Haftmittelprodukts zur optischen Verwendung nach einem der Ansprüche 10 bis 13, wobei sich in dem Erwärmschritt die Erwärmungs-Temperatur auf der Seite, an der das ungehärtete Silicongel-Ausgangsmaterial in Kontakt mit der Abziehfolie (A) oder Luft ist, von der Erwärmungs-Temperatur auf der Seite, an der das ungehärtete Silicongel-Ausgangsmaterial in Kontakt mit der Abziehfolie (B) ist, unterscheidet.

17. Verfahren zur Herstellung des transparenten druckempfindlichen Haftmittelprodukts zur optischen Verwendung nach einem der Ansprüche 10 bis 13, wobei sich in dem Kühlschritt der Kühlgeschwindigkeitsgradient auf der Seite, an der das gehärtete Silicongel in Kontakt mit der Abziehfolie (A) oder Luft ist, von demjenigen auf der Seite, an der das gehärtete Silicongel in Kontakt mit der Abziehfolie (B) ist, unterscheidet.

## Revendications

1. Produit adhésif autocollant transparent destiné à une utilisation optique, présentant une face adhésive (a) et une face adhésive (b) d'adhésivités différentes, et formé d'un gel de silicone du type à réaction par addition, dans lequel
une relation entre un pouvoir d'adhérence (Ga) de la face adhésive (a) et un pouvoir d'adhérence (Gb) de la face adhésive (b) est Ga < Gb,
le pouvoir d'adhérence (Ga) et le pouvoir d'adhérence (Gb) conduisent à un nombre de billes de 3 à 15 et à une différence de nombres de billes de 2 à 12, dans un test incliné d'adhérence de bille (angle d'inclinaison de 30 degrés) selon JIS Z0237, et
la face adhésive (a) et la face adhésive (b) sont formées par chauffage et durcissement d'un matériau de base non durci dudit gel de silicone, du type à réaction par addition, mis en contact étroit avec un film séparable (A) et un film séparable (B) de types différents.

2. Produit adhésif autocollant transparent destiné à une utilisation optique, présentant une face adhésive (a) et une face adhésive (b) d'adhésivités différentes, et formé d'un gel de silicone du type à réaction par addition, dans lequel
une relation entre un pouvoir d'adhérence (Ga) de la face adhésive (a) et un pouvoir d'adhérence (Gb) de la face adhésive (b) est Ga < Gb,
le pouvoir d'adhérence (Ga) et le pouvoir d'adhérence (Gb) conduisent à un nombre de billes de 3 à 15 et à une différence de nombres de billes de 2 à 12, dans un test incliné d'adhérence de bille (angle d'inclinaison de 30 degrés) selon JIS Z0237, et
la face adhésive (a) est formée par chauffage et durcissement d'un matériau de base non durci dudit gel de silicone du type à réaction par addition qui est mis en contact avec l'air, et la face adhésive (b) est formée par chauffage et durcissement du matériau de base non durci mis en contact étroit avec un film séparable (B).

3. Produit adhésif autocollant transparent destiné à une utilisation optique selon la revendication 1 ou 2, dans lequel une relation entre une résistance au pelage (F1) entre le film séparable (A) et la face adhésive (a), une résistance au pelage (F2) entre le film séparable (B) et la face adhésive (b), et la résistance au pelage (F3) entre la face adhésive (a) et une surface adhésive (C) est telle qu'une différence d'adhésion de peau sur 180 degrés entre la résistance au pelage (F1) et la résistance au pelage (F2) est comprise entre 0,2 et 1,0 N/25 mm, et la différence d'adhésion de peau sur 180 degrés entre la résistance au pelage (F2) et la résistance au pelage (F3) n'est pas inférieure à 0,2 N/25 mm, dans un test de résistance d'adhésif selon JIS Z0237.

4. Produit adhésif autocollant transparent destiné à une utilisation optique selon la revendication 3, dans lequel une relation entre la résistance au pelage (F3) et une résistance au pelage (F4) entre la face adhésive (b) et une surface adhésive (D) est telle que la différence d'adhésion de peau sur 180 degrés entre la résistance au pelage (F3) et la résistance au pelage (F4) n'est pas inférieure à 0,2 N/25 mm, dans un test de résistance d'adhésif selon JIS Z0237.

5. Produit adhésif autocollant transparent destiné à une utilisation optique selon la revendication 1 ou 2, dans lequel la dureté dudit gel de silicone est une dureté Asker C de 0 à 30, selon le standard SRIS 0101, ou une profondeur de pénétration d'aiguille (25°C) de 20 à 200 selon JIS K2207.

6. Produit adhésif autocollant transparent destiné à une utilisation optique selon la revendication 5, dans lequel le facteur de transmission dudit gel de silicone à une longueur d'onde de 380 à 780 nm n'est pas inférieur à 80 %.

7. Produit adhésif autocollant transparent destiné à une utilisation optique selon la revendication 1 ou 2, dans lequel le film séparable (A) est un film séparable à base de résine alkyde, et le film séparable (B) est un film séparable à base de fluorosilicone.

8. Stratifié adhésif autocollant transparent destiné à une utilisation optique, qui est obtenu par laminage d'un film séparable (A) sur la face adhésive (a), et d'un film séparable (B) sur la face adhésive (b), du produit adhésif autocollant transparent destiné à une utilisation optique selon la revendication 1 ou 2.

9. Stratifié adhésif autocollant transparent destiné à une utilisation optique, qui est obtenu par laminage d'un film séparable (B) sur la face adhésive (b) du produit adhésif autocollant transparent destiné à une utilisation optique selon la revendication 1 ou 2, afin d'obtenir un stratifié en forme de rouleau sur lequel la face arrière du film séparable (B) est en contact avec la face adhésive (a).

10. Procédé de fabrication du stratifié adhésif autocollant transparent destiné à une utilisation optique selon la revendication 8, le procédé comprenant :
une étape de moulage en intercalant un matériau de base sous forme de gel de silicone du type à réaction par addition liquide non durci entre le film séparable (A) et le film séparable (B), et de prise du matériau dans son épaisseur ;
une étape de chauffage consistant à chauffer et durcir, après le moulage ou simultanément avec le moulage ; et
une étape de refroidissement consistant à refroidir le gel de silicone durci obtenu dans l'étape de chauffage et durcissement, ensemble avec le film séparable (A) et le film séparable (B).

11. Procédé de fabrication du stratifié adhésif autocollant transparent destiné à une utilisation optique selon la revendication 8, le procédé comprenant :
une étape de moulage consistant à délivrer un matériau de base sous forme de gel de silicone du type à réaction par addition liquide non durci sur le film séparable (B), et de prise du matériau dans son épaisseur ;
une étape de chauffage consistant à chauffer et durcir, alors qu'elle est en contact avec l'air, au moins une partie de la surface du matériau de base sous forme de gel de silicone non durci qui n'est pas en contact avec le film séparable (B), après moulage ou simultanément avec le moulage ;
une étape de refroidissement consistant à refroidir le gel de silicone durci obtenu dans ladite étape de chauffage et durcissement, ensemble avec le film séparable (B) ; et
une étape d'application de film séparable consistant à appliquer le film séparable (A) sur la face chauffée et durcie en contact avec l'air dans ladite étape de chauffage.

12. Procédé de fabrication du stratifié adhésif autocollant transparent destiné à une utilisation optique selon la revendication 9, le procédé comprenant :
une étape de moulage consistant à délivrer un matériau de base sous forme de gel de silicone du type à réaction par addition liquide non durci sur le film séparable (B), et de prise du matériau dans son épaisseur ;
une étape de chauffage consistant à chauffer et durcir, alors qu'elle est en contact avec l'air, au moins une partie de la surface du matériau de base sous forme de gel de silicone non durci qui n'est pas en contact avec le film séparable (B), après moulage ou simultanément avec le moulage ;
une étape de refroidissement du gel de silicone durci obtenu dans ladite étape de chauffage et durcissement, ensemble avec le film séparable (B) ; et
une étape d'enroulement consistant à enrouler le film séparable (B), la face adhésive (a) formée par durcissement en contact avec l'air dans ladite étape de chauffage étant en contact avec la face arrière du film séparable (B).

13. Procédé de fabrication du stratifié adhésif autocollant transparent destiné à une utilisation optique selon la revendication 9, le procédé comprenant :
une étape de moulage consistant à intercaler un matériau de base sous forme de gel de silicone du type à réaction par addition liquide non durci, entre le film séparable (A) et le film séparable (B), et de prise du matériau dans son épaisseur ;
une étape de chauffage consistant à chauffer et durcir après moulage ou simultanément avec le moulage ;
une étape de refroidissement consistant à refroidir le gel de silicone obtenu dans ladite étape de chauffage et durcissement, ensemble avec le film séparable (A) et le film séparable (B) ;
une étape de pelage consistant à séparer par pelage le film séparable (A) du gel de silicone durci et à exposer la face adhésive (a) ; et
une étape d'enroulement consistant à enrouler sous une forme de rouleau l'ensemble avec le film séparable (B), la face adhésive (a) étant en contact avec la face arrière du film séparable (B).

14. Procédé de fabrication du produit adhésif autocollant transparent destiné à une utilisation optique selon la revendication 10 ou 11, dans lequel la face du film séparable (A) qui entre en contact avec le produit adhésif autocollant transparent est soumise à un traitement de séparation à base de résine alkyde, et la face du film séparable (B) qui entre en contact avec le produit adhésif autocollant transparent est soumise à un traitement de séparation à base de fluorosilicone.

15. Procédé de fabrication d'un produit adhésif autocollant transparent destiné à une utilisation optique selon la revendication 12 ou 13, dans lequel la face du film séparable (B) qui entre en contact avec le produit adhésif autocollant transparent est soumise à un traitement de séparation à base de fluorosilicone, et la face arrière du film séparable (B) est soumise à un traitement de séparation à base de résine alkyde.

16. Procédé de fabrication du produit adhésif autocollant transparent destiné à une utilisation optique selon l'une quelconque des revendications 10 à 13, dans lequel dans ladite étape de chauffage, la température de chauffage du côté sur lequel le matériau de base sous forme de gel de silicone non durci est en contact avec le film séparable (A) ou l'air est différente de la température de chauffage du côté sur lequel le matériau de base sous forme de gel de silicone non durci est en contact avec le film séparable (B).

17. Procédé de fabrication du produit adhésif autocollant transparent destiné à une utilisation optique selon l'une quelconque des revendications 10 à 13, dans lequel, dans ladite étape de refroidissement, le gradient de vitesse de refroidissement du côté sur lequel le gel de silicone durci est en contact avec le film séparable (A) ou l'air est différent de celui du côté sur lequel ledit gel de silicone durci est en contact avec le film séparable (B).
